# EUROPEAN PATENT APPLICATION

(11) **EP 4 775 628 A1**
(43) Date of publication of application: **15.07.2026**
(21) Application number: 25151106.9
(22) Date of filing: 10.01.2025
(51) Int. Cl.: C08K 5/07, C08L 23/06, C08J 3/24, F16L 9/12

(54) **POLYMERIC PIPES**

(71) Applicant: Uponor Innovation AB, 737 61 Virsbo (SE)
(72) Inventor: MENSSEN, Todd, 55057 Northfield (US)
(74) Representative: Li Schrag, Yue

(57) **Abstract**

This invention relates to a polymeric pipe, and more particularly a polymeric pipe wherein the pipe comprises a crosslinked polyolefin formed from extruded polyolefin comprising photoinitiator of formula (I) or formula (II):

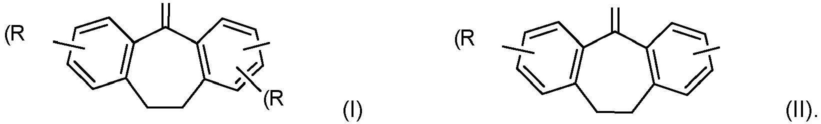

Also provided are methods of producing such cross-linked polymeric pipes. The pipes are intended to be used in cold (e.g. potable) or hot water applications. The pipes of the invention may be particularly suitable for cold water application, since they typically exceed all current standards for drinking water transmission.

## Description

This invention relates to a polymeric pipe, and more particularly a polymeric pipe wherein the pipe comprises a crosslinked polyolefin formed from extruded polyolefin comprising photoinitiator. The pipes are intended to be used in cold (e.g. potable) or hot water applications. The pipes of the invention are particularly suitable for cold water application since they exceed all current standards for drinking water transmission.

### BACKGROUND

Extruded pipes made from polyolefin polymers are well known for a variety of industrial applications. Typically they are used in the building industry for domestic (e.g. potable) water pipes, radiator pipes, floor-heating pipes and for similar applications in ship building etc. Such pipes can also be used as district heating pipes and as process pipes in the food industry etc. Other applications include the conveyance of gaseous fluids and slurries.

The polyolefin used in extruded pipes is often crosslinked, as this provides a number of advantages. Such advantages include, but are not limited to, long term stability including oxidation resistance, which assists in meeting current codes and standards for potable water applications, flexibility in installation including a "memory effect", etc. Crosslinked polyethylene (PEX) is commonly used for plastic pipes. There are several varieties of PEX that utilize a number of different crosslinking chemistries and processing technologies. Various PEX grades further contain other additives such as antioxidants and/or stabilizer packages in different concentrations and combinations. Three known varieties of PEX for pipe applications are PEX-a, PEX-b, and PEX-c.

In the PEX-a process ("Engel Method"), the cross-linking is induced by peroxide under the influence of heat and high pressure. The resultant PEX-a composition is crosslinked through carbon-carbon bonds to form the cross-linked polymer network. The PEX-a crosslinking process occurs in the melted stage, as opposed to the primary crosslinking processes for PEX-b and PEX-c. The primary reaction is the formation of free radicals upon decomposition of the peroxide, which has to be present by definition for PEX-a, and subsequently, the free radical abstracts hydrogens from the PE polymer chains. The latter gives new carbon radicals, which next combines with neighboring PE chains to form stable carbon-carbon bonds, i.e., crosslinks. The crosslinking, which is considered to be homogeneous and uniform for PEX-a, gives degrees of crosslinking (typically referred to as CCL) in the range of 70-90 % for practical applications. Requirement for CCL is to be above 70% for PEX-a as defined in ASTM International Standard for Crosslinked Polyethylene (PEX) Tubing, F 876-24b (approved November 21, 2024). The PEX-a process may therefore be used to produce good quality pipes.

In the PEX-b process, the crosslinking is induced by moisture and heat over extended pre-determined times typically conducted in a "Sauna atmosphere". The most commonly used methods are referred to as the Sioplas (two-steps), and the Monosil (one step) methods, respectively. In the Sioplas method, a silane, such as for example a vinylsilane is grafted to a HDPE resin prior to pipe extrusion. In the Monosil method, a silane is blended with the HDPE resin during pipe extrusion. In both methods, which are chemically different in the pre-crosslinking steps, the fundamental principle for the actual crosslinking are practically identical, i.e., the crosslinking occurs in a secondary post-extrusion process that is accelerated by a combination of heat and moisture. The latter combination is the active "reagent", which is involved in the primary hydrolysis and condensation reaction. In principle, the extruded pipe is exposed to hot water and a steam bath. A fundamental difference to PEX-a, is that for PEX-b, the resultant crosslinks are not between carbon-carbon bonds, but instead, oxygen-silicon covalent bonds (siloxane "bridges") are formed. In comparison with PEX-a, the crosslink density (CCL) are somewhat lower for PEX-b (65-70%), and the crosslinking is also less uniform.

In the PEX-c process, the crosslinking is commonly referred to as a "cold" method. In the PEX-c process, no chemicals are needed in order to facilitate the crosslinking process, but instead high energy electron beam (EB) irradiation is utilized to create the free radicals necessary for the hydrogen abstraction and subsequent crosslinking to take place. The high energy electron beams are non-selective, i.e., chemical bonds are cleaved in an un-controlled fashion. The latter has the consequence of creating side reactions, together with the reaction aimed for, i.e., the crosslinking of HDPE. The crosslinking density for PEX-c is typically in the 70-75% range, and caution has to be taken with irradiation time since a too long exposure may give discolored products and/or brittleness. PEX-c has been successfully used for many years despite the somewhat challenging production conditions.

Another possible crosslinking process is ultraviolet (UV) curing, i.e., photoinduced crosslinking, where a pipe formulation comprising a combination of a polyolefinic polymer (e.g. polyethylene), a photoinitiator and a co-agent is exposed to UV radiation to form a crosslinked polymer. In the case where polyethylene is utilized, the final product is a PEX pipe. UV curing is generally considered to be a "green" and environmentally friendly technology, since no solvents are used in the process and no emission of volatile chemicals takes place.

One major challenge that occurs with all extruded pipes used for drinking water applications is the potential issue with leaching of the various additives from the polymer pipe matrix. The various additives which include initiators, stabilisers, co-agents, processing aids, antioxidants, etc. may leach from the polymer matrix over time and can become available to contaminate the fluid contents flowing within the pipe. This problem is a particular issue in cases such as drinking water applications and industry standards exist which quantify the allowable safe levels of leaching of materials from the pipe over a period of time for such applications. The various additives are required to be present in the pipe when manufacturing it in order to facilitate processing of the pipe when extruding the raw material polymer and also to ensure structural integrity and resistance to ageing etc. of the finished pipe. At the same time, the very presence of these materials presents a challenge since these materials may leach from the polymer matrix over a period of time.

The use of plastics pipes in drinking water applications is a challenge as described above. One difficulty is the requirement to find the right stabiliser or combination of stabilizers that gives sufficient long-term stability. One measure of this stability is chlorine resistance according to the standard ASTM F2023. At the same time, the stabilizers, anti-oxidants, photoinitiators, co-agents, and other additives, should not generate too high levels of remaining residuals in the final pipe products, which would make it impossible to meet the standards required for drinking water pipes (in North America this is the NSF 61 standard).

A stabiliser package is typically needed to ensure the pipes have practical utility. However, stabilisers also have a tendency to leach from plastics pipes over a period of time. Stabilisation of thermoplastic polymers is usually accomplished by melt blending with one or more stabilisers. In this way, a heterophase polymer/stabiliser system is formed, which may be best described as a physical dispersion of a low molecular weight stabiliser in a polymer matrix. The vast majority of commercial stabiliser compounds have very different chemical structure from that of the non-polar host thermoplastic polymer. For this reason, the compatibility of various conventional stabilisers with polyolefins is generally poor, thereby leading to migration i.e. leaching of admixed stabilisers across the boundary of the polyolefin with neighbouring fluids, liquids, gases or solid materials. This loss of stabiliser substantially shortens the lifetime of the polyolefin. Of more concern is the fact that the migration of stabilisers into drinking water (potable water) can also have unpredictable and potentially toxic effects on consumers. We have previously developed a stabiliser package that is suitable for use in drinking water pipes, as is described in WO 2010/138816.

A method for studying stabiliser migration involves immersing the pipe in boiling water with subsequent measurement of the oxidation induction time (OIT) level, which gives an indication of how much active stabiliser is remaining in the pipe and measures how easily the stabiliser is able to leach out of the pipe wall.

Similarly, other additives such as crosslinking agents are required in order to ensure the structural integrity of the pipes in the senses of both their immediate ability to withstand pressure from fluid being transported within, and to ensure their overall long-term performance. The long-term performance of plastics pipes is typically evaluated using the Standard Extrapolation Method (SEM) test of ISO 9080 (e.g. in Europe) or the ASTM D 2837 method (e.g. in North America). These methods involve testing pipes that are pressurised at elevated temperatures and measures the time to burst at different stress levels. Considerable research effort has been focused on so-called stage III ruptures, which take place when the stabiliser package has ceased to be effective or if the degree of crosslinking is insufficient.

EP 0 490 854 B1 describes the use of double screw extruders in combination with UV irradiation to produce crosslinked polyethylene pipes such as those intended for hot water applications. This document discloses specific photoinitiators for achieving crosslinking to enable the fast processing of polymeric materials. A series of benzophenone derivatives is disclosed which are said to be compatible with polyethylene. However, this document does not address the issue of leaching of such materials from the polymer matrix.

The polymer materials of EP 0 490 854 B1 may be prepared using a twin screw extruder. However, the patent is more concerned with the nature of the photoinitiators and does not actually describe the features of the extruder other than its ability to mix and extrude material. The line speeds achievable with the process claimed in that patent are also quite low and were in the range of 1 m/min or less. This is not ideal for a commercial process.

It is apparent that known extruded pipes and methods of making such pipes are subject to a number of limitations. One such limitation relates to the undesirable degradation of by-products of Type II photoinitiators into low molecular weight species that can leach into the drinking water, such that said pipes may fail to meet the standards required for drinking water pipes (in North America this is the NSF 61 standard).

There is therefore a need for new combinations of chemical components to improve the properties of polyolefin pipes.

It is an aim of the present invention to provide materials for forming pipes that can be used in domestic cold and/or hot water application. It is also an aim to provide materials for producing pipes for industrial application. It is an aim to produce pipes which are resistant to the leaching out over time of one or more photoinitiator by-products. A further aim is to produce pipes for domestic applications which meet or exceed current standards leaching of additives over time. The present invention satisfies some or all of these aims.

### BRIEF SUMMARY OF THE DISCLOSURE

The present invention is concerned with extruded polymeric pipes which benefit from reduced levels of leaching of benzene residuals relative to existing products currently available in the marketplace.

In a first aspect of the invention, there is provided an extruded polymeric pipe formed from a composition comprising:
a polyolefin structural polymer;
a photoinitiator in an amount of from about 0.02% to 3% by weight; and
a co-agent in an amount of 0.02% to 10% by weight;
wherein the photoinitiator is a compound of formula (I) or formula (II): 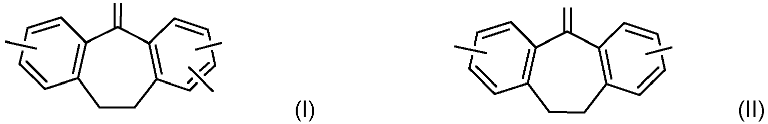 wherein:
R¹ is independently selected at each occurrence from -halo, -OR³, -(C₁ - C₄)alkyl, - (C₂ - C₄)alkenyl and -(C₂ - C₄)alkynyl;
R² is selected from -C₄ - C₂₄ alkyl, -(CH₂)ₘ(C₂ - C₂₄₋ₘ alkenyl), -(CH₂)ₘ(C₂ - C₂₄₋ₘ alkynyl), -C₄ - C₂₄ haloalkyl, -(CH₂)ₘ(C₂ - C₂₄₋ₘ haloalkenyl), and -(CH₂)ₘ(C₂ - C₂₄₋ₘ haloalkynyl);
R³ is independently selected at each occurrence from H, -C₄ - C₂₄ alkyl, -(CH₂)ₘ(C₂ - C₂₄₋ₘ alkenyl), -(CH₂)ₘ(C₂ - C₂₄₋ₘ alkynyl), -C₂ - C₂₄ haloalkyl, -(CH₂)ₘ(C₂ - C₂₄₋ₘ haloalkenyl), and -(CH₂)ₘ(C₂ - C₂₄₋ₘ haloalkynyl);
m is independently at each occurrence selected as an integer of from 2 to 22;
n is an integer selected from 0 to 4; and
p is an integer selected from 0 to 3,
wherein the total number of carbon atoms in all R¹ and R² is at least 8.

The inventors have surprisingly found that the polymeric pipes formed using a photoinitiator of formula (I) are more resistant to the leaching of harmful photoinitiator by-products, e.g. low molecular weight by-products, such as benzene. Without wishing to be bound by theory, it is thought that the structure of the photoinitiator of formula (I) prevents the production of such by-products following α-cleavage due to the presence of additional carbon-carbon bonds connecting the two benzyl groups in the compound of formula (I).

In the known chemical crosslinking reaction of exposing benzophenone to ultraviolet (UV) radiation, the photoinitiator extracts hydrogen from polyethylene to produce free radicals. Two radicals then combine to produce a carbon-carbon crosslink bond:

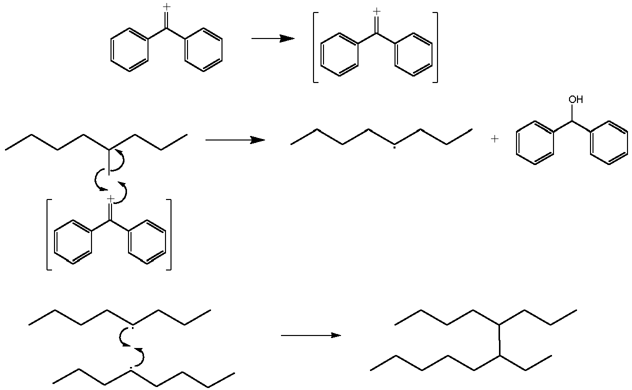

When using known benzophenone-derived photoinitiators, the following cleavage is thought to occur on the hydrogen extraction intermediate to produce benzene (or a benzene derivative when using a substituted benzophenone):

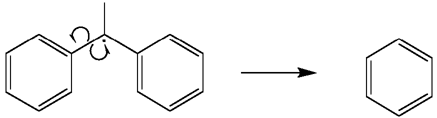

Benzene (and its derivatives) are known to leach from extruded pipes, limiting the compliance of these pipes with regulatory standards. For example, NSF 61 sets limits on chemical leaching for drinking water pipes.

NSF 61 relates to the hygiene requirement and concerns the need to minimize chemical leaching from the finished pipes. Drinking water pipes in North America must pass the NSF 61 test. The purpose of this test is to assure the customer that the quality of the water inside the pipe is not compromised by chemicals leaching into it. There are three ways to complete this test: 1) single point test, 2) 21-Day multipoint test and 3) 107-Day multipoint test. All three tests involve changing the water inside the pipe every 24 hours over an extended period of time. For the single point test only the water extract on Day 17 is tested. For the multipoint tests the water extracts on several days are analysed and the resulting data is then used to create a decay curve.

In the case of benzene (and its derivatives), a pipe compliant with NSF 61 may have levels of benzene (or its derivatives) of less than or equal to 5 ppb. Thus, even a slight amount of benzene leaching could lead to a lack of compliance with this standard.

In contrast, in the photoinitiators used in the present invention, when the above proposed carbon-carbon cleavage occurs, the benzene group is not released due to the second covalent attachment of the two benzene rings to one another, i.e.: 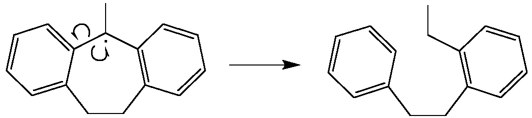 Hydrogen

The degradation of the photoinitiators of formula (I) therefore do not lead to the release of benzene (or a derivative thereof). The pipes of the present invention therefore do not lead to the leaching of any benzene (or derivatives thereof). The pipes of the invention accordingly provide improved hygiene performance compared to those produced using benzophenone derivatives.

In a second aspect of the invention, there is provided a method of producing a cross-linked polyolefin pipe comprising:
extrusion of an extrusion mixture from an extruder to form an extruded pipe; and
cross-linking a polyolefin structural polymer by irradiating the extruded pipe with UV radiation,
wherein the extrusion mixture comprises:
a polyolefin structural polymer;
a photoinitiator in an amount of from about 0.02% to 3% by weight; and
a co-agent in an amount of 0.02% to 10% by weight;
wherein the photoinitiator is a compound of formula (I) or formula (II): 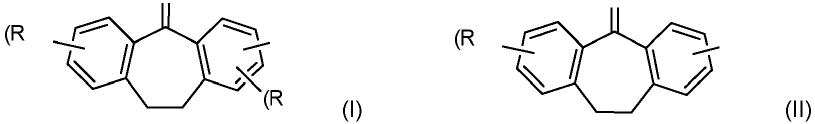
wherein:
R¹ is independently selected at each occurrence from -halo, -OR³, -(C₁ - C₄)alkyl, -(C₂ - C₄)alkenyl and -(C₂ - C₄)alkynyl;
R² is selected from -C₄ - C₂₄ alkyl, -(CH₂)ₘ(C₂ - C₂₄₋ₘ alkenyl), -(CH₂)ₘ(C₂ - C₂₄₋ₘ alkynyl), -C₄ - C₂₄ haloalkyl, -(CH₂)ₘ(C₂ - C₂₄₋ₘ haloalkenyl), and -(CH₂)ₘ(C₂ - C₂₄₋ₘ haloalkynyl);
R³ is independently selected at each occurrence from H, -C₄ - C₂₄ alkyl, -(CH₂)ₘ(C₂ - C₂₄₋ₘ alkenyl), -(CH₂)ₘ(C₂ - C₂₄₋ₘ alkynyl), -C₂ - C₂₄ haloalkyl, -(CH₂)ₘ(C₂ - C₂₄₋ₘ haloalkenyl), and -(CH₂)ₘ(C₂ - C₂₄₋ₘ haloalkynyl);
m is independently at each occurrence selected as an integer of from 2 to 22;
n is an integer selected from 0 to 4; and
p is an integer selected from 0 to 3,
wherein the total number of carbon atoms in all R¹ and R² is at least 8.

In a third aspect of the invention, there is provided a use of a photoinitiator as defined in the first aspect, in the production of a cross-linked polyolefin pipe.

In a fourth aspect of the invention, there is provided a cross-linked polyolefin pipe obtainable by or obtained by a method of the second aspect, or by the use of the third aspect.

In a fifth aspect of the invention, there is provided a use of an extruded polymeric pipe of the first aspect or of a cross-linked polyolefin pipe of the fourth aspect for the transport of water.

### BRIEF DESCRIPTION OF THE DRAWINGS

Embodiments of the invention are further described hereinafter with reference to the accompanying drawings, in which:
Figure 1 is a flowchart illustrating a process for making pipes of the invention.
Figure 2 is a line diagram illustrating apparatus that may be used to perform the process of steps (B) to (F) of Figure 1.
Figure 3 is a line diagram illustrating apparatus that may be used to perform the process of steps (G) to (I) of Figure 1.

### DETAILED DESCRIPTION

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

For the avoidance of doubt, it is hereby stated that the information disclosed earlier in this specification under the heading "Background" is relevant to the invention and is to be read as part of the disclosure of the invention.

Polymeric pipes of this invention may be used for variety of applications, for example transport of hot and/or cold potable water, radiant floor heating, or waste water, as well as being used in fire sprinklers, process pipes in industries such as the food industry, and for conveying fluids other than water such as gases and slurries, among other uses. In some embodiments, these polymeric pipes include a base pipe with one or more layers disposed on the base pipe. Examples of various layers that may be disposed on a polymeric base pipe are included in US 2010/0084037, entitled "Methods and Compositions for Coating Pipe," which is incorporated by reference in its entirety. In other embodiments, the polymeric pipe includes the base pipe with no layers disposed on the base pipe, i.e. the pipe will consist of a single (i.e. one) layer.

### PIPE STANDARDS AND CERTIFICATIONS

Pipe standards and standard test procedures referenced in the present disclosure include the following:
ASTM International Standard for Crosslinked Polyethylene (PEX) Tubing, F 876-20 (approved July 1, 2020) ("ASTM F876");
ASTM International Standard Test Method for Evaluating the Oxidative Resistance of Crosslinked Polyethylene (PEX) Tubing and Systems to Hot Chlorinated Water, F2023-10 (approved August 1, 2010) ("ASTM F2023");
ASTM International Standard Test Method for Obtaining Hydrostatic Design Basis for Thermoplastic Pipe Materials or Pressure Design Basis for Thermoplastic Pipe Products D2837-11 (approved April 1, 2011) ("ASTM D2837");
NSF International Standard / American National Standard for Drinking Water Additives 61-2020 (August 19, 2020) ("NSF 61"); and
EN ISO 15875.

The contents of all of these standards are incorporated herein by reference.

The tests referred to herein are known standards in the industry and are available to the skilled person. We therefore only refer to them briefly in the interests of brevity. However, the content of these standards forms an integral part of the invention to the extent that the pipes according to the invention meet or exceed the requirements of the standards. Hence the content of these standards is explicitly incorporated into the present disclosure by reference.

Presently, PEX tubing in North America must meet temperature and pressure ratings requirements of 160 psi at 73.4 °F (23 °C), 100 psi at 180 °F (82.2 °C), and 80 psi at 200 °F (93.3 °C). Minimum burst ratings are at 475 psi at 73.4 °F (5/8 inch and larger). Additional performance characteristics and requirements for PEX pipes and tubing are given in ASTM F867.

ASTM F876 (North America) and EN ISO 15875 (Europe): Before product launch, any pipes have to pass all required testing in accordance with these two standards, respectively. The most time consuming and difficult requirements are mentioned specifically below.

Temperature/Pressure Ratings: According to NSF/PPI, pipes are only approved (for North America) if they pass 2,000h of testing without damage. This test is conducted at higher temperature and pressures. Generally a pipe should not fail if it passes this condition but the pipe still needs to pass 16,000h for completion.

Chlorine resistance is measured by ASTM F2023 and requires approximately 12-15 months of testing for completion.

Specific additives are typically needed for any application where polymers are utilized to create consumer products. For example, pipes for drinking water applications typically comprise stabilizers, anti-oxidants, crosslinking agents, processing additives, etc. as part of the final pipe composition, regardless of manufacturing method. These additives are typically necessary to provide pipes with desirable physical properties, e.g. pipes that satisfy ASTM F876 and / or EN ISO 15875 requirements. These chemical additives are, however, typically subject to leaching from the final chemical pipe. Leaching of chemicals into the pipe is, however, undesirable. In addition, for certain applications there are limits set on levels of leached chemicals. For example, NSF 61 sets limits on chemical leaching for drinking water pipes.

NSF 61 relates to the hygiene requirement and concerns the need to minimize chemical leaching from the finished pipes. Drinking water pipes in North America must pass the NSF 61 test. The purpose of this test is to assure the customer that the quality of the water inside the pipe is not compromised by chemicals leaching into it. There are three ways to complete this test: 1) single point test, 2) 21-Day multipoint test and 3) 107-Day multipoint test. All three tests involve changing the water inside the pipe every 24 hours over an extended period of time. For the single point test only the water extract on Day 17 is tested. For the multipoint tests the water extracts on several days are analysed and the resulting data is then used to create a decay curve.

The water extracts are analysed by a Gas Chromatograph equipped with a Mass Selective Detector (GC/MS). If deemed necessary other analytical techniques are also used. Twenty-four hours prior to collecting a sample for analysis some of the samples are heated at 82°C for 30 minutes. The heated extracts are then analysed by GC/MS for semi-volatile compounds using EPA624 method. The rest of the samples are conditioned at room temperature and then analysed by GC/MS for volatile compounds using EPA524 method.

To pass the multipoint tests the concentration of all chemicals extracted into the water must decay to below the Short Term Exposure Limit (STEL) on Day 17 and Total Allowable Concentration (TAC) on Day 107. For the single point test both the STEL and TAC limits must be met on Day 17.

The allowance limits of NSF 61 were typically in the in the ppm range until recent years when the requirements have become more stringent, for example with the limits set in the ppb range for a number of compounds in current NSF standards.

The degree of crosslinking can be quantified in accordance with the following citation from ASTM F876:
"6.8. Degree of Crosslinking-When tested in accordance with 7.9, the degree of crosslinking for PEX tubing material shall be within the range from 65 to 89% inclusive. Depending on the process used, the following minimum percentages crosslinking values shall be achieved: 70% by peroxides (PEX-a), 65% by Azo compounds, 65% by electron beam (PEX-c), or 65% by silane compounds (PEX-b)".
Ideally, pipes should have a high, i.e. at least 50% (preferably at least 65%), level of cross-linking according to the standard. However, in some applications a lower degree of cross-linking may be acceptable.

The present invention is able to produce extruded pipes that satisfy a defined target level of crosslinking (CCL), i.e. a CCL of at least 60% (e.g. of at least 70%) in a consistent and homogeneous manner, to satisfy or exceed the ASTM F876 standard and which satisfy the NSF 61 standard for benzene (or benzene derivatives) residuals.

### DEFINITIONS

The following explanations of terms and methods are provided to better describe the present disclosure and to guide those of ordinary skill in the art in the practice of the present disclosure.

The terms "alkyl", "C₄-C₂₄ alkyl" and "Cₓ-C_{y} alkyl" (where x is at least 1 and less than 10, and y is a number greater than 10) as used herein include reference to a straight or branched chain alkyl moiety having, e.g. 1, 2, 3, 4, 5, 6, 7, 8, 9, 10, 11, 12, 13, 14, 15, 16, 17, 18, 19, 20, 21, 22, 23 or 24 carbon atoms. The term includes reference to, for example, methyl, ethyl, propyl (n-propyl or isopropyl), butyl (n-butyl, sec-butyl or tert-butyl), pentyl, hexyl and the like. In particular, alkyl may be a "C₁-C₆ alkyl", i.e. an alkyl having 1, 2, 3, 4, 5 or 6 carbon atoms; or a "C₁-C₄ alkyl", i.e. an alkyl having 1, 2, 3 or 4 carbon atoms. The term "lower alkyl" includes reference to alkyl groups having 1, 2, 3 or 4 carbon atoms.

The terms "alkenyl", "C₂-C₂₄ alkenyl" and "Cₓ-C_{y} alkenyl" (where x is at least 2 and less than 10, and y is a number greater than 10) as used herein include reference to a straight or branched chain alkyl moiety having, e.g. 2, 3, 4, 5, 6, 7, 8, 9, 10, 11, 12, 13, 14, 15, 16, 17, 18, 19, 20, 21, 22, 23 or 24 carbon atoms and having, in addition, at least one double bond, of either E or Z stereochemistry where applicable. This term includes reference to, for example, ethenyl, 2-propenyl, 1-butenyl, 2-butenyl, 3-butenyl, 1-pentenyl, 2-pentenyl, 3-pentenyl, 1-hexenyl, 2-hexenyl and 3-hexenyl and the like. In particular, alkenyl may be a "C₂-C₆ alkenyl", i.e. an alkenyl having 2, 3, 4, 5 or 6 carbon atoms; or a "C₂-C₄ alkenyl", i.e. an alkenyl having 2, 3 or 4 carbon atoms. The term "lower alkenyl" includes reference to alkenyl groups having 2, 3 or 4 carbon atoms.

The terms "alkynyl", "C₂-C₂₄ alkynyl" and "Cₓ-C_{y} alkynyl" (where x is at least 2 and less than 10, and y is a number greater than 10) as used herein include reference to a straight or branched chain alkyl moiety having, e.g. 2, 3, 4, 5, 6, 7, 8, 9, 10, 11, 12, 13, 14, 15, 16, 17, 18, 19, 20, 21, 22, 23 or 24 carbon atoms and having, in addition, at least one triple bond. The triple bond may be at any possible position of the hydrocarbon chain. For example, "C₂-C₆-alkynyl" may refer to ethynyl, propynyl, butynyl, pentynyl and hexynyl.

The terms "halo" or "halogen" as used herein includes reference to F, CI, Br or I. In a particular class of embodiments, halogen is F or CI, of which F is more common.

The terms "haloalkyl", "C₄-C₂₄ haloalkyl" and "Cₓ-C_{y} haloalkyl" (where x is at least 1 and less than 10, and y is a number greater than 10) refer to an alkyl group as defined herein substituted with at least one halogen atom independently chosen at each occurrence from: fluorine, chlorine, bromine and iodine. The halogen atom may be present at any position on the hydrocarbon chain.

The terms "haloalkenyl", "C₂-C₂₄ haloalkenyl" and "Cₓ-C_{y} haloalkenyl" (where x is at least 2 and less than 10, and y is a number greater than 10) refer to an alkenyl group as defined herein substituted with at least one halogen atom independently chosen at each occurrence from: fluorine, chlorine, bromine and iodine. The halogen atom may be present at any position on the hydrocarbon chain.

The terms "haloalkynyl", "C₂-C₂₄ haloalkynyl" and "Cₓ-C_{y} haloalkynyl" (where x is at least 2 and less than 10, and y is a number greater than 10) refer to an alkynyl group as defined herein substituted with at least one halogen atom independently chosen at each occurrence from: fluorine, chlorine, bromine and iodine. The halogen atom may be present at any position on the hydrocarbon chain.

Where a compound, moiety, process or product is described as "optionally" having a feature, the disclosure includes such a compound, moiety, process or product having that feature and also such a compound, moiety, process or product not having that feature. Thus, when a moiety is described as "optionally substituted", the disclosure comprises the unsubstituted moiety and the substituted moiety.

Where two or more moieties are described as being "independently" or "each independently" selected from a list of atoms or groups, this means that the moieties may be the same or different. The identity of each moiety is therefore independent of the identities of the one or more other moieties.

The term "CCL" refers to the crosslink density, typically expressed as a percentage. Throughout the description and claims of this specification, the phrases "degree of crosslinking", "level of crosslinking" and "crosslink density" or similar mean CCL.

The term "STEL" refers to the short term exposure limit. It typically represents the maximum concentration of a contaminant (e.g. a compound) that is permitted by a standard. For example, the NSF 61 standard specifies STEL values that represent the maximum concentration of a contaminant that is permitted in drinking water for an acute exposure calculated in accordance with the standard.

The term "TAC" refers to total allowable concentration. This is typically the maximum concentration of a contaminant (e.g. a compound) that a single product is allowed to contribute to a fluid. For example, the NSF 61 standard specifies TAC values that represent the maximum concentration of a contaminant in drinking water that a single product is allowed to contribute in accordance with the standard.

### PIPES

Unless indicated otherwise in this specification, any reference to a specific component (e.g. polyolefin structural polymer, photoinitiator, reactive extrusion species, co-agent, hindered amine light stabiliser, antioxidant, or any optional additive) in an amount of % by weight is a reference to the component as a % of its weight relative to the total weight of the layer of the pipe in which it is present. As will be appreciated, for a single layer pipe, such an amount of % by weight is a reference to the component as a % of its weight relative to the total weight of the pipe.

Polymeric pipes of the invention comprise a polyolefin structural polymer. Although the structural polymer may be polyethylene (PE), those of ordinary skill in the art understand that various other structural polymers may be used in place of polyethylene. For example, the structural polymer may be a polyolefin such as PE (e.g., PE-raised temperature, or PE-RT), polypropylene (PP), polybutylenes (PB); any copolymers thereof; polyolefin copolymers such as poly(ethylene-co-maleic anhydride); among other polymers. For example, the structural polymer may be polyethylene, polypropylene, polybutylene, and higher olefinic polymers; copolymers of ethylene, propylene, 1-butene, 2-butene, 1-pentene, 1-hexene, 1-heptene and 1-octene and isomers thereof with each other and with other unsaturated monomers. Block copolymers and polymer blends of polymerised monomers of any of the abovementioned polymers are also included. The polymeric pipe may have at least 85 % by weight polyolefin structural polymer, at least 90 % by weight polyolefin structural polymer, or at least 95 % by weight polyolefin structural polymer.

Preferred polyolefin structural polymers for use in the present invention include polyethylene, polypropylene, and mixtures thereof.

Polyethylene (PE) is classified into several different categories based mostly on its density and branching. The final product performance and mechanical properties depend significantly on variables such as the extent and type of branching, the crystallinity, the density, and the molecular weight and its distribution. As mentioned, PEX pipes are by far and most commonly manufactured from high density polyethylene (HDPE), however, this invention is applicable where any type of polyolefin or polyethylene is used for the production of single-layer or multi-layer plastic pipes such as, but not limited to, low density polyethylene (LDPE), medium density polyethylene (MDPE), PE 100, PE 80, PE-RT grades, and ultra-high molecular weight polyethylene (UHMWPE) or combinations thereof. Examples of commercially available PE that may be used in pipes of the present invention include Basell Q 456, Basell Q 456B, Basell New Resin, Basell Q 471, (all three of which are available from Equistar Chemicals, LP Lyondell Basell Company, Clinton Iowa, United States) Borealis HE 1878, Borealis HE 1878 E, Borealis HE 2550 (all three of which are available from Borealis AG).

The polymeric pipes of the invention may comprise cross-linked polyethylene (PEX) as the polyolefin structural polymer, in which case the pipe may be a PEX pipe. The structural polymer in such a pipe may comprise or consist of any of the varieties of polyethylene mentioned herein which have been crosslinked, preferably by the action of UV-radiation.

The polyethylene may be high density polyethylene (HDPE) with a melt flow index (MFI) of at least 2. The polyethylene may be high density polyethylene (HDPE) with a melt flow index (MFI) of at least 3. The polyethylene may be high density polyethylene (HDPE) with a melt flow index (MFI) of at least 4. The polyethylene may be high density polyethylene (HDPE) with a melt flow index (MFI) of at least 5.

The pipes of the invention may be pipes, for example PEX pipes, that meet temperature and pressure ratings requirements of 160 psi at 23 °C (73.4 °F), 100 psi at 82.2 °C (180 °F), and 80 psi at 93.3 °C (200 °F). Minimum burst ratings are at 475 psi at 23 °C (73.4 °F) (5/8 inch and larger). PEX pipes of the invention may also meet additional performance characteristics and requirements set out in the ASTM F 876-24b approved November 21, 2024, which is incorporated by reference in its entirety.

Polymeric pipes of the invention comprise a photoinitiator as defined herein.

The photoinitiator may be present in an amount of 0.02 to 3% by weight, for example 0.2 to 3% by weight, e.g. the photoinitiator may be present in an amount of 0.2 to 2.5% by weight or 0.2 to 2% by weight. For example, the photoinitiator may be present in an amount of 0.3 to 1.5% by weight, 0.4 to 1.2% by weight, or 0.4 to 1% by weight; e.g. about 0.5 % by weight, about 0.75 % by weight or about 1% by weight.

The photoinitiator has an important role in crosslinking the polyolefin structural polymer. In particular, the photoinitiator undergoes a bimolecular reaction where the excited state of the photoinitiator normally interacts with a second molecule (co-initiator) to generate free radicals. The excited state can also abstract hydrogens from the surrounding polymer matrix, e.g., from a polyethylene polymer backbone, to induce and complete the necessary crosslinking, as being relevant in the present invention.

The crosslinking process involves a radical mechanism to facilitate crosslinking. This process is illustrated below using suberone and PE, and comprises the steps of initiation, hydrogen abstraction and crosslinking.

Initiation:

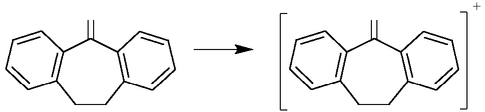

Hydrogen abstraction from the polyethylene chain:

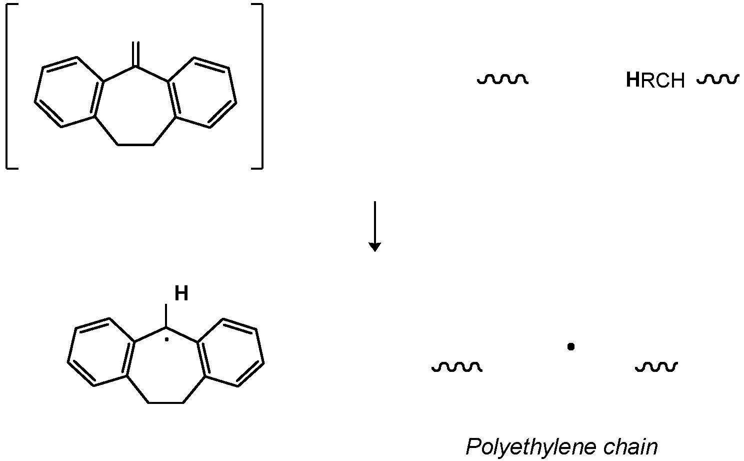

Crosslinking to form a crosslinked polymer network (in this example PEX):

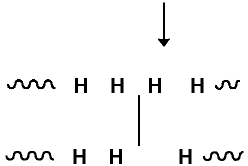

In the invention, the photoinitiator is a compound of formula (I) or formula (II): 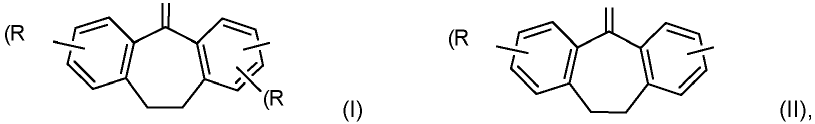 wherein R¹ is independently selected at each occurrence from -halo, -OR³, -(C₁ - C₄)alkyl, -(C₂ - C₄)alkenyl and -(C₂ - C₄)alkynyl;
R² is selected from -C₄ - C₂₄ alkyl, -(CH₂)ₘ(C₂ - C₂₄₋ₘ alkenyl), -(CH₂)ₘ(C₂ - C₂₄₋ₘ alkynyl), -C₄ - C₂₄ haloalkyl, -(CH₂)ₘ(C₂ - C₂₄₋ₘ haloalkenyl), and -(CH₂)ₘ(C₂ - C₂₄₋ₘ haloalkynyl);
R³ is independently selected at each occurrence from H, -C₄ - C₂₄ alkyl, -(CH₂)ₘ(C₂ - C₂₄₋ₘ alkenyl), -(CH₂)ₘ(C₂ - C₂₄₋ₘ alkynyl), -C₂ - C₂₄ haloalkyl, -(CH₂)ₘ(C₂ - C₂₄₋ₘ haloalkenyl), and -(CH₂)ₘ(C₂ - C₂₄₋ₘ haloalkynyl);
m is independently at each occurrence selected as an integer of from 2 to 22;
n is an integer selected from 0 to 4; and
p is an integer selected from 0 to 3;
wherein the total number of carbon atoms in all R¹ and R² is at least 8.

In embodiments, each R¹ is independently selected from -halo, -OR³, and -(C₁ - C₄)alkyl. In embodiments, in embodiments, each R¹ is independently selected from -halo and -(C₁ - C₄)alkyl. In embodiments, each R¹ is independently selected from -OR³ and -(C₁ - C₄)alkyl.

In embodiments, each R¹ is independently -(C₁ - C₄)alkyl, e.g. -methyl, -ethyl, - propyl, or-butyl. In embodiments, each R¹ is -OR³.

In embodiments, R² is selected from -C₄ - C₂₄ alkyl, -(CH₂)ₘ(C₂ - C₂₄₋ₘ alkenyl) and -(CH₂)ₘ(C₂ - C₂₄₋ₘ alkynyl). In embodiments, R² is selected from -C₄ - C₂₄ haloalkyl, - (CH₂)ₘ(C₂ - C₂₄₋ₘ haloalkenyl), and -(CH₂)ₘ(C₂ - C₂₄₋ₘ haloalkynyl).

The alkyl, alkenyl or alkynyl may be straight chain alkyl, alkenyl or alkynyl. The alkyl, alkenyl or alkynyl may be a branched chain alkyl, alkenyl or alkynyl. The alkyl, alkenyl or alkynyl may be or comprise a cyclic alkyl, alkenyl or alkynyl. The alkenyl may comprise 1 or 2 double bonds, e.g. the alkenyl may comprise 1 double bond. The alkynyl may comprise 1 or 2 triple bonds, e.g. the alkynyl may comprise 1 triple bond.

In embodiments, R² is selected from -C₄ - C₂₄ alkyl and -C₄ - C₂₄ haloalkyl. In embodiments, R² is -C₄ - C₂₄ alkyl, e.g. -C₈ - C₂₀ alkyl. In embodiments, R² is -C₄ - C₂₄ haloalkyl, e.g. -C₈ - C₂₀ haloalkyl.

R² may be -C₄ - C₂₄ alkyl, e.g. -C₆ - C₂₀ alkyl or -C₈ - C₁₈ alkyl. R² may be -C₄ alkyl, -C₅ alkyl, -C₆ alkyl, -C₇ alkyl, -C₈ alkyl, -C₉ alkyl, -C₁₀ alkyl, -C₁₁ alkyl, -C₁₂ alkyl, - C₁₃ alkyl, -C₁₄ alkyl, -C₁₅ alkyl, -C₁₆ alkyl, -C₁₇ alkyl, -C₁₈ alkyl, -C₁₉ alkyl, -C₂₀ alkyl, -C₂₁ alkyl, -C₂₂ alkyl, -C₂₃ alkyl, or -C₂₄ alkyl; for example R² may be -C₈ alkyl, -C₉ alkyl, -C₁₀ alkyl, -C₁₁ alkyl, -C₁₂ alkyl, -C₁₃ alkyl, -C₁₄ alkyl, -C₁₅ alkyl, -C₁₆ alkyl, -C₁₇ alkyl, -C₁₈ alkyl.

R² may be -C₈ - C₂₀ alkyl. For example, R² may be -C₈ alkyl, -C₉ alkyl, -C₁₀ alkyl, -C₁₁ alkyl, -C₁₂ alkyl, -C₁₃ alkyl, -C₁₄ alkyl, -C₁₅ alkyl, -C₁₆ alkyl, -C₁₇ alkyl, -C₁₈ alkyl, - C₁₉ alkyl or -C₂₀ alkyl.

R² may be -(CH₂)ₘ(C₂ - C₂₄₋ₘ alkenyl). For example, R² may be -(CH₂)ₘ(C₂ - C₂₂₋ₘ alkenyl), -(CH₂)ₘ(C₂ - C₂₀₋ₘ alkenyl), or -(CH₂)ₘ(C₂ - C₁₈₋ₘ alkenyl). R² may be - (CH₂)ₘ(C₂ - C₂₄₋ₘ alkynyl). For example, R² may be -(CH₂)ₘ(C₂ - C₂₂₋ₘ alkynyl), -(CH₂)ₘ(C₂ - C₂₀₋ₘ alkynyl), or -(CH₂)ₘ(C₂ - C₁₈₋ₘ alkynyl).

R² may be -C₄ - C₂₄ haloalkyl, -(CH₂)ₘ(C₂ - C₂₄₋ₘ haloalkenyl), -(CH₂)ₘ(C₂ - C₂₄₋ₘ haloalkynyl). R² may be selected from -C₅ - C₂₂ haloalkyl, -(CH₂)ₘ(C₂ - C₂₂₋ₘ haloalkenyl), or -(CH₂)ₘ(C₂ - C₂₂₋ₘ haloalkynyl). R² may be selected from -C₆ - C₂₀ haloalkyl, - (CH₂)ₘ(C₂ - C₂₀₋ₘ haloalkenyl), or -(CH₂)ₘ(C₂ - C₂₀₋ₘ haloalkynyl).

The haloalkyl, haloalkenyl or haloalkynyl may be straight chain haloalkyl, haloalkenyl or haloalkynyl. The haloalkyl, haloalkenyl or haloalkynyl may be a branched chain haloalkyl, haloalkenyl or haloalkynyl. The haloalkyl, haloalkenyl or haloalkynyl may be or comprise a cyclic haloalkyl, haloalkenyl or haloalkynyl. The haloalkenyl may comprise 1 or 2 double bonds, e.g. the haloalkenyl may comprise 1 double bond. The haloalkynyl may comprise 1 or 2 triple bonds, e.g. the haloalkynyl may comprise 1 triple bond.

The total number of carbon atoms in all R¹ and R² together is at least 8. It may be that R¹ has at least 4 carbon atoms and R² has 4 or more carbon atoms. It may be that R¹ has at least 3 carbon atoms and R² has 5 or more carbon atoms. It may be that R¹ has at least 2 carbon atoms and R² has 6 or more carbon atoms. It may be that R¹ has at least 1 carbon atom and R² has 7 or more carbon atoms. It may be that R¹ has 0 carbon atoms and R² has 8 or more carbon atoms.

In embodiments, R³ is independently selected at each occurrence from -C₁ - C₂₄ alkyl, -(CH₂)ₘ(C₂ - C₂₄₋ₘ alkenyl), -(CH₂)ₘ(C₂ - C₂₄₋ₘ alkynyl), -C₂ - C₂₄ haloalkyl, - (CH₂)ₘ(C₂ - C₂₄₋ₘ haloalkenyl), and -(CH₂)ₘ(C₂ - C₂₄₋ₘ haloalkynyl). In embodiments, R³ is independently selected at each occurrence from H, -C₁ - C₂₄ alkyl, -(CH₂)ₘ(C₂ - C₂₄₋ₘ alkenyl) and -(CH₂)ₘ(C₂ - C₂₄₋ₘ alkynyl). In embodiments, R³ is independently selected at each occurrence from H and -C₁ - C₂₄ alkyl. In embodiments, R³ is H. In embodiments, R³ is independently at each occurrence a -C₁ - C₂₄ alkyl, e.g. -C₁ - C₄ or -C₁ - C₈ alkyl.

The alkyl, alkenyl or alkynyl may be straight chain alkyl, alkenyl or alkynyl. The alkyl, alkenyl or alkynyl may be a branched chain alkyl, alkenyl or alkynyl. The alkyl, alkenyl or alkynyl may be or comprise a cyclic alkyl, alkenyl or alkynyl. The alkenyl may comprise 1 or 2 double bonds, e.g. the alkenyl may comprise 1 double bond. The alkynyl may comprise 1 or 2 triple bonds, e.g. the alkynyl may comprise 1 triple bond.

The haloalkyl, haloalkenyl or haloalkynyl may be straight chain haloalkyl, haloalkenyl or haloalkynyl. The haloalkyl, haloalkenyl or haloalkynyl may be a branched chain haloalkyl, haloalkenyl or haloalkynyl. The haloalkyl, haloalkenyl or haloalkynyl may be or comprise a cyclic haloalkyl, haloalkenyl or haloalkynyl. The haloalkenyl may comprise 1 or 2 double bonds, e.g. the haloalkenyl may comprise 1 double bond. The haloalkynyl may comprise 1 or 2 triple bonds, e.g. the haloalkynyl may comprise 1 triple bond.

m is independently at each occurrence an integer selected from 2 to 22. For example, each m is independently 2, 3, 4, 5, 6, 7, 8, 9, 10, 11, 12, 13, 14, 15, 16, 17, 18, 19, 20, 21, or 22. In embodiments, each m is independently 4, 5, 6, 7, 8, 9, 10, 11, 12, 13, 14, 15, 16, 17, 18, 19 or 20, e.g. 6 - 18, 8 - 18 or 10 - 18. For example, when n is 0, m may be at least 7, e.g. at least 8, at least 10, or at least 12. For example, when n is 0, m may be 8-18, 8-16, 8-14, 10-18, 10 - 16 or 10 - 14.

In embodiments, n is selected from 0, 1 and 2. In embodiments, n is selected from 0 and 1. In embodiments, n is 0. In embodiments, n is 1. In embodiments, n is 2.

In embodiments, p is selected from 0, 1 and 2. In embodiments, p is selected from 0 and 1. In embodiments, p is 0. In embodiments, p is 1. In embodiments, p is 2

In embodiments, n is 0 and/or p is 0 and R² comprises at least 8 carbon atoms. In embodiments, n is 0 and R² comprises at least 8 carbon atoms. In embodiments, p is 0 and R² comprises at least 8 carbon atoms. In embodiments, n is 0, p is 0, and R² comprises at least 8 carbon atoms.

Polymeric pipes of the invention may comprise one or more photoinitiators of formula (I); e.g. at least 1, at least 2, at least 3, at least 4 or at least 5 photoinitiators as defined herein.

In embodiments, the photoinitiator is a compound of formula (Ia): 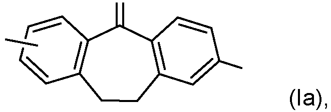 where R¹, R² and n are as defined herein.

In embodiments, the photoinitiator is a compound of formula (Ib): 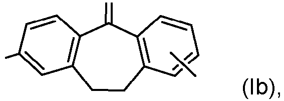 where R¹ and R² are as defined herein.

In embodiments, the photoinitiator is a compound of formula (Ic): 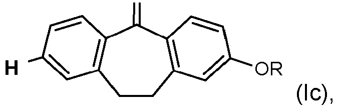 where R¹ and R² are as defined herein.

In embodiments, the photoinitiator is a compound of formula (III): 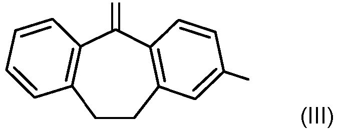 wherein R² is as defined herein.

In embodiments, the photoinitiator is:

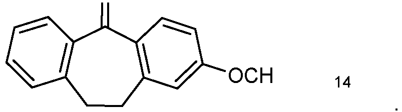

Without wishing to be bound by theory, it is thought that the presence of the -OR² and optionally the R¹ groups on the photoinitiator compounds used in the invention contribute to reducing the leaching of the photoinitiator by-products from the polymeric pipe. For example, where R² and/or R¹ comprise alkyl and similar moieties of a requisite length, these may be chemically compatible with the polyolefin structural polymer, thereby retaining the photoinitiator reaction products within matrix of the pipe and reducing leaching.

Polymeric pipes of the invention comprise a co-agent, for example, one or more co-agents; e.g. at least 1, at least 2, at least 3, at least 4 or at least 5 co-agents as defined herein. The selected co-agents (monomers and/or oligomers) used in the formulations in the present invention comprise at least one polymerizable double bond or reactive group. The co-agent provides additional crosslinks between the polyolefin chains of the polyolefin structural polymer. The co-agent thus acts to promote and enhance the efficiency of the crosslinking process, e.g. where the polyolefin structural polymer is polyethylene the co-agent enhances the crosslinking of the polyethylene chains to produce PEX.

The co-agent (or total amount of co-agents) is present in the composition from which the polymeric pipe is formed in an amount of 0.02 to 10% by weight. For example, the co-agent may be present in an amount of 0.1 to 5% by weight, 0.2 to 2.5% by weight, 0.3 to 1.5% by weight, e.g. about 0.5 % by weight.

The co-agent may comprise at least one reactive carbon-carbon double bond. The co-agent may comprise at least two reactive carbon-carbon double bonds. The co-agent may comprise at least three reactive carbon-carbon double bonds. A reactive carbon-carbon double bond may be a carbon-carbon double bond that is a terminal carbon-carbon bond. A reactive carbon-carbon double bond may be a carbon-carbon double bond where one of the carbon atoms comprises two geminal hydrogen atoms.

Preferred co-agents comply with NSF 61 requirements. Polymeric co-agents such as polybutadienes, or any polymer backbone containing unsaturated moieties may be used within the framework of the present invention, and will typically comply with NSF 61 requirements when used in pipes of the invention.

For example, a wide variety of acrylates can be used as co-agents, and include: 1,6-hexanediol diacrylate, 1,3-butylene glycol diacrylate, diethylene glycol diacrylate, trimethylolpropane triacrylate, neopentyl glycol diacrylate, polyethylene glycol 200 diacrylate, tetraethylene glycol diacrylate, triethylene diacrylate, pentaerythritol tetraacrylate, tripropylene glycol diacrylate, ethoxylated bisphenol-A diacrylate, propylene glycol (mono) dimethacrylate, trimethylolpropane diacrylate, di-trimethylolpropane tetraacrylate, triacrylate of tris(hydroxyethyl) isocyanurate, dipentaerythritol hydroxypentaacrylate, pentaerythritol triacrylate, ethoxylated trimethylolpropane triacrylate, triethylene glycol dimethacrylate, ethylene glycol dimethacrylate, tetraethylene glycol dimethacrylate, polyethylene glycol-200 dimethacrylate, 1,6-hexanediol dimethacrylate, neopentyl glycol dimethacrylate, polyethylene glycol-600 dimethacrylate, 1,3-butylene glycol dimethacrylate, ethoxylated bisphenol-A dimethacrylate, trimethylolpropane trimethacrylate, 1,4-butanediol diacrylate, diethylene glycol dimethacrylate, pentaerythritol tetramethacrylate, glycerin dimethacrylate, trimethylolpropane dimethacrylate, pentaerythritol trimethacrylate, pentaerythritol dimethacrylate, pentaerythritol diacrylate, aminoplast(meth)acrylates, acrylated oils such as linseed, soy bean oil, castor oil, etc. Other applicable polymerizable compounds include methacrylamides, maleimides, vinyl acetate, vinyl caprolactam, thiols and polythiols. Styrene derivatives are also readily applicable within the framework of this invention.

In embodiments, the co-agent is selected from or comprises reactive groups such as acrylates, allyl ethers, polybutadienes, vinyl ethers, and mono or polyunsaturated oils, such as soybean oil. For example, in embodiments, the co-agent is selected from or comprises acrylates, allyl ethers, polybutadienes and vinyl ethers.

The co-agent may be an oligomer or a pre-polymer. For example, the co-agent may be an oligomer or a pre-polymer having acrylate functionality, e.g. selected from polyurethane acrylates, epoxy acrylates, silicone acrylates, and polyester acrylates. In embodiments, the co-agent may comprise an oligomer or pre-polymer that is a polyurethane acrylate, e.g. a Krasol NN prepolymer (available from Cray Valley, Inc., Exton, PA, USA).

Other exemplary co-agents include (meth)acrylated epoxies, (meth)acrylated polyesters, (meth)-acrylated silicones, (meth)acrylated urethanes/polyurethanes, (meth)acrylated poly-butadiene, (meth)acrylated acrylic oligomers and polymers, and the like, and any combinations thereof.

Further examples of co-agents of use in the invention include the following:
Triallylcyanurate 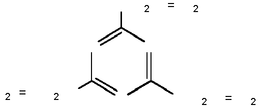
Polybutadiene 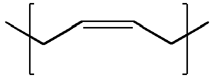
wherein n is selected such that the average molecular weight is from about 2,000 to about 10,000 g/mol, preferably from about 4,000 to about 7,000 g/mol, e.g. the average molecular weight may be 3,000 or 5,000 g/mol.
Hydroxy terminated and epoxidized polybutadiene (Poly BD 600E) 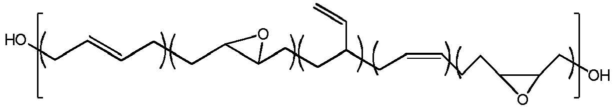 having an average molecular weight of about 2,100 g/mol.
Polybutadiene-Ricon 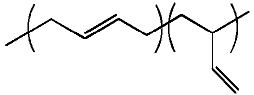 wherein x and y are selected such that the average molecular weight is from about 1,000 to about 10,000 g/mol, preferably from about 2,000 to about 7,000 g/mol. For example, Polybutadiene-Ricon 142 of average molecular weight 4,100 g/mol (CAS # 9003-17-2). Polybutadiene-Ricon 152 of average molecular weight 2,900 g/mol (CAS # 9003-17-2). Polybutadiene-Ricon 156 of average molecular weight 2,900 g/mol. Polybutadiene-Ricon 157 of average molecular weight 1,800 g/mol.
Trimethylolpropane triacrylate (TMPTA) 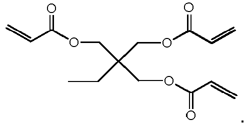
Poly(ethylene glycol) diacrylate (CAS #: 26570-48-9) 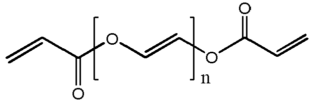
where n is selected such that the average molecular weight is about 575 g/mol.

Polybutadiene diacrylate (CAS #: 9003-17-2) of average molecular weight 2,200 g/mol.

Krasol^{®} NN polyurethane prepolymer (available from Cray Valley, Inc., Exton, PA, USA), for example Krasol^{®} NN 32 (9% NCO, MDI based, 56% vinyl content, viscosity of 12,000 Cps at 25 °C and/or Krasol^{®} NN 35.

In embodiments, the co-agent comprises at least one of triallylcyanurate; polybutadiene optionally selected from polybutadiene 3000, polybutadiene 5000, hydroxy terminated polybutadiene, hydroxy terminated and epoxidized polybutadiene, Polybutadiene-Ricon 142, Polybutadiene-Ricon 152, Polybutadiene-Ricon 156, Polybutadiene-Ricon 157, polybutadiene diacrylate; or trimethylolpropane triacetate (TMPTA).

In embodiments, the co-agent is or comprises triallylcyanurate. In embodiments, the co-agent is or comprises a polybutadiene. In embodiments, the co-agent is or comprises trimethylolpropane (TMPTA).

Polymeric pipes of the invention may comprise a hindered amine light stabilizer (HALS), for example one or more HALS; e.g. at least 1, at least 2, at least 3, at least 4 or at least 5 HALS as defined herein. HALS are compounds in which an amine group is sterically hindered by adjacent functional groups. The physical properties of structural polymers such as PE may tend to degrade over time when exposed to ultraviolet (UV) wavelengths of light. The use of HALS in the polymer blend interferes with this degradation and facilitates the maintenance of the structural polymer properties over time. The total amount of HALS (e.g., any one or more of the HALS described herein) may be from 0.05 to 1% by weight, from 0.05 to 0.3% by weight, from 0.05 to 0.5% by weight, from 0.07 to 0.3% by weight, from 0.1 to 0.25% by weight, or from 0.1 to 0.2% by weight; or about 0.1 % by weight, or about 0.15% by weight.

Exemplary HALS are described in WO 2010/138816 A1, which is incorporated by reference in its entirety. For example, WO 2010/138816 A1 discloses, at paragraph [0050] on pages 15 to 17, HALS that may be used in the pipes of the invention.

The HALS may comprise a piperidine group. In some such embodiments, the HALS may be a compound of the following formula:

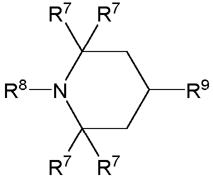

Each R⁷ and R⁸ may be hydrogen or a C₁-C₃₀ saturated or unsaturated aliphatic moiety. R⁹ may be a C₂-C₃₀ saturated or unsaturated straight, branched or cyclic aliphatic moiety such as a hydrocarbon (consisting only of carbon and hydrogen), an ester, an ether, or other suitable functional group.

In some embodiments, at least one of the R⁷ groups at each of the 2 and 6 positions is a C₁-C₃₀ saturated or unsaturated straight, branched or cyclic aliphatic moiety, while in other embodiments both of the R⁷ groups at each of the 2 and 6 positions is a C₁-C₃₀ saturated or unsaturated straight, branched or cyclic aliphatic moiety. In one example, one or both of the R⁷ groups at the 2 and 6 positions in the piperidine ring are alkyl groups (e.g., a methyl or ethyl group), and R⁸ is a hydrogen, methyl or ethyl group.

R⁹ may be a long chain (C₆ or greater, C₈ or greater, C₁₂ or greater, or C₁₆ or greater) straight or branched aliphatic functional group, at least a portion of which is compatible with a nonpolar polyolefin structural polymer such as PE. R⁹ may include an alicyclic structure such as a second piperidine ring. Where R⁹ includes a piperidine ring, a portion of R⁹ may act as a bridge between two piperidine rings. In some such embodiments, the bridge between the two piperidine rings may be a saturated aliphatic moiety or an unsaturated aliphatic moiety (e.g., it may contain a C-C double bond such as methylene). In addition, R⁹ may also be included at other positions on the piperidine ring, for example at any one, any two, or at all three of, the 3, 4 and 5 positions on the piperidine ring.

R⁹ may be an ester of formula -R¹⁰C(O)OR¹¹ or -R¹¹C(O)OR¹⁰. R¹⁰ may be either the piperidine ring (where the ester moiety is attached directly to the piperidine ring) or an additional functional group (e.g., a C₁-C₃₀ saturated or unsaturated aliphatic functional group) that functions as a bridging group between the ester moiety and the piperidine ring. R¹¹ may be a C₂-C₃₀ saturated or unsaturated carbon-containing moiety, for example an aliphatic function group (e.g., a straight, branched or cyclic aliphatic group). R¹¹ together with the carbon atom of the ester moiety may form a C₂-C₃₀ saturated or unsaturated ester.

In embodiments, the hindered amine light stabiliser is selected from or comprises: 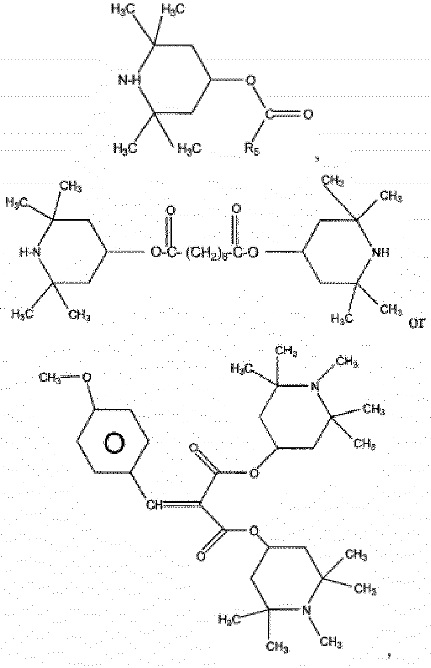 wherein R⁵ is a C₂-C₂₄ alkyl group.

In embodiments, the hindered amine light stabiliser is selected from or comprises Cyasorb 3853, Chimasorb 944LD, Tinuvin 770, Tinuvin 622.

Further examples of HALS of use in the present invention are the following:
Cyasorb 3853, which may be represented by formula 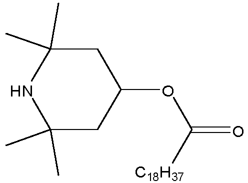 which has a molecular weight of 379 g/mol.
Chimassorb 944LD, which may be represented by formula 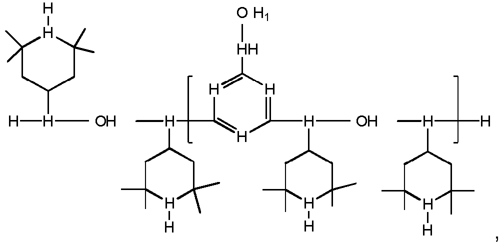 which has a molecular weight of 2000 to 3100 g/mol.
Tinuvin 770, which may be represented by formula 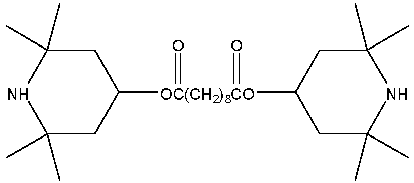 which has a molecular weight of 481 g/mol.
Tinuvin 622, which may be represented by formula 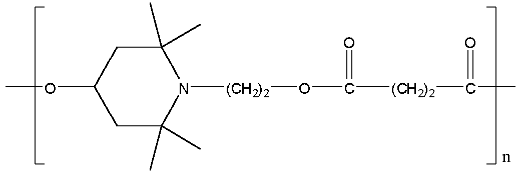 which has a molecular weight of 3100 to 4000 g/mol.

Without being bound by any theory, it is believed that the structure of the HALS of the invention contributes to reduced leaching from the polymer matrix. For example, it is believed that the relatively long chain fatty acid portions that do not act as bridging groups in the HALS Cyasorb 3853 provide a portion of the compound that is compatible with a polyolefin structural polymer (e.g. a polyethylene). This compatibility provides a level of miscibility and homogeneity in the polymer blend that both improves the burst strength of the finished pipe and prevents and / or reduces the leaching of the Cyasorb 3853 into any water that is resident within the pipe.

Polymeric pipes of the invention may comprise an antioxidant, for example one or more phenolic antioxidants; e.g. at least 1, at least 2, at least 3, at least 4 or at least 5 antioxidants as defined herein. Antioxidants may be used to preserve the polymer blend during the production process, for example when the polymer blend is exposed to the elevated heat and pressure of the extrusion process. Specifically, the mechanical properties of some structural polymers, such as PE, will tend to deteriorate due to oxidative degradation when exposed to heat and pressure. For example, in some cases the deterioration will evidence as the formation of shorter chains, effectively decreasing the average molecular weight of the structural polymer and changing the characteristics of the structural polymer. Antioxidants act to prevent or limit such deterioration.

Antioxidants may also facilitate the maintenance of pipe properties over time, especially when the pipe is exposed to chlorine or other oxidizing agents. In one example, a fluid (e.g. potable water) that is present in the pipe may contain oxidizing agents such as chlorine, which over time may tend to oxidize and break down a structural polymer such as PE. Such oxidation may cause degradation in the properties of the structural polymer and the finished pipe. In some examples, antioxidants tend to preserve the properties of the structural polymer in the presence of an oxidative environment. The total amount of antioxidant (e.g., any one or more of the antioxidants described herein) may be from 0.1 to 1 % by weight, from 0.25 to 0.75 % by weight, from 0.2 to 0.6 % by weight, from 0.38 to 0.57 % by weight, or about 0.5 wt%.

Suitable antioxidants include phenolic antioxidants. Examples of such antioxidants are described in WO 2010/138816 A1, which is incorporated by reference in its entirety. For example, WO 2010/138816 A1 discloses, at paragraph [0048] on pages 12 to 14, antioxidants that may be used in the pipes of the invention. Exemplary antioxidants that may be used in the polymeric pipes of the invention include:

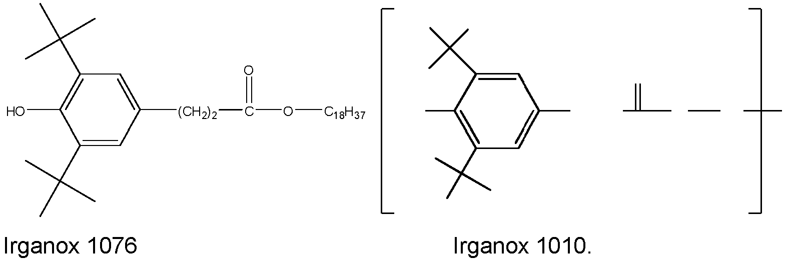

Certain pipes of the invention that comprise a hindered amine light stabilizer and / or an antioxidant may provide an oxidative resistance as measured under the OR test (described under the subheading "Assays" below) of greater than 50 years, greater than 75 years, greater than 100 years, greater than 150 years, or greater than 200 years. Certain AO/HALS combinations may also provide greater than 60 minutes, greater than 75 minutes, greater than 90 minutes, greater than 100 minutes, or greater than 125 minutes under the OIT test.

Pipes of the invention may comprise further additives, for example the pipes may comprise one or more processing aids, fillers or pigments. For example, pipes of the present invention may comprise fillers, e.g. nano-particles, nano-fibres, or other organic fillers, inorganic fillers, fibres, or particles. For example the pipes may comprise processing aids, e.g. fluoropolymers. For example, pipes of the present invention may comprise a fluoropolymer that is selected from 3M^{™} Dynamar^{™} polymer processing additives, e.g. 3M^{™} Dynamar^{™} Polymer Processing Additive FX 9613 (available from 3M Center, St. Paul, MN). When the pipe comprises at least one processing aid, the processing aid may be present at a level of from 0.01 to 1% by weight, for example 0.01 to 0.5% by weight; e.g. 0.02 to 0.4% by weight, 0.02 to 0.1% by weight.

In embodiments, the pipe is a cross-linked polyolefin pipe with the characteristics of a pipe obtainable by: extrusion of a mixture comprising the polyolefin structural polymer, photoinitiator and co-agent from a co-rotating twin screw extruder to form an extruded pipe; and cross-linking the structural polymer by irradiating the extruded pipe with UV radiation.

In embodiments, the extrusion comprises passing the mixture from the extruder through a gear pump and then a die head.

In embodiments, the degree of crosslinking is at least about 60%. In embodiments, the degree of crosslinking is at least about 65%. In embodiments, the degree of crosslinking is at least about 70%. In embodiments, the degree of crosslinking is at least about 75%.

In embodiments, the degree of crosslinking is in the range of about 60 to about 90%. In embodiments, the degree of crosslinking is in the range of about 65 to about 80%. optionally wherein the degree of crosslinking is in the range of about 70% to about 75%.

In embodiments, in the pipes of the invention, when tested in accordance with NSF 61, the level of residuals of the following compounds are at the specified level:
benzene is less than 5 ppb,
benzophenone is less than or equal to 30 ppb,
benzhydrol is less than or equal to 50 ppb,
p-hydroxybenzophenone is less than or equal to 10 ppb,
p-hydroxybenzhydrol is less than or equal to 10 ppb, and
*p*-formylbenzophenone is less than or equal to 10 ppb.

In embodiments, level of residual benzene is less than 1 ppb. In embodiments, level of residual benzene is less than 0.75 ppb. In embodiments, level of residual benzene is less than 0.5 ppb. In embodiments, level of residual benzene is less than 0.25 ppb.

### METHODS

Pipes may be manufactured in accordance with a method or process of the invention. The process of the present invention requires both an extruder to produce PEX pipes and the presence of at least one UV irradiator unit to achieve the crosslinking. The process may include a gear pump to ensure consistency of the extrudate. The process is based on photo-induced crosslinking (UV irradiation) which is very fast and has flexibility in material choice. However there is no premature crosslinking in the extruder.

The polyolefin structural polymer may be as defined in the first aspect.

The photoinitiator may be as defined in the first aspect.

The co-agent may be as defined in the first aspect.

The extrusion mixture may further comprise a hindered amine light stabiliser as defined in the first aspect.

The extrusion mixture may further comprises an antioxidant as defined in the first aspect.

In embodiments, the extrusion comprises passing the mixture from the extruder through a gear pump and then a die head.

In embodiments, after irradiating, the cross-linked polyolefin pipe is calibrated by a calibration fixture.

In embodiments, the extruder is selected from a single screw extruder, a counter-rotating twin screw extruder and a co-rotating twin screw extruder. In embodiments, the extruder is a co-rotating twin screw extruder.

In embodiments, the components of the extrusion mixture are mixed before being injected into the extruder. In these embodiments, the extruder may be a single screw extruder or a counter-rotating twin screw extruder.

In embodiments, the extruder is a co-rotating twin screw extruder and the polyolefin structural polymer and at least one component are separately injected into the extruder; wherein the at least one component is selected from the photoinitiator, co-agent, and, when present, the phenolic antioxidant, and/or the hindered amine light stabiliser; and wherein the polyolefin structural polymer and the at least one component are mixed by a mixing element of the twin-screw extruder.

In embodiments, the at least one component comprises two or more components.

In embodiments, the at least one component comprises the photoinitiator, the co-agent, and the phenolic antioxidant.

In embodiments, the at least one component comprises the photoinitiator, the co-agent, the phenolic antioxidant and the hindered amine light stabiliser.

In embodiments, the extrusion is performed at an extruder output of greater than 100 kg/h. In embodiments, the extrusion is performed at an extruder output of greater than 200 kg/h.

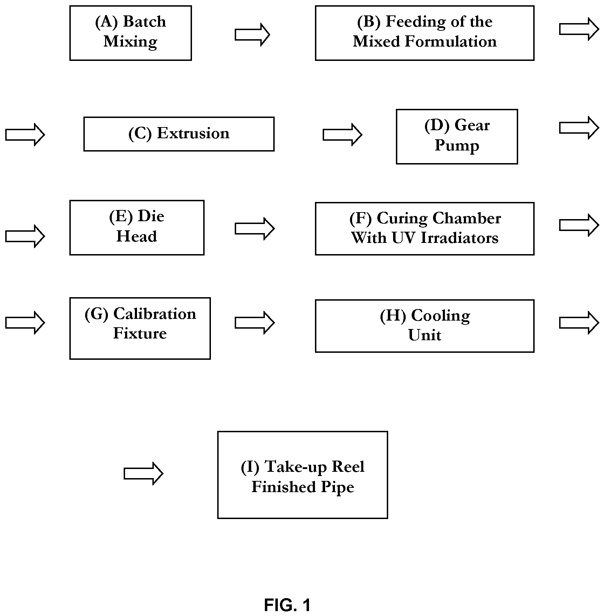

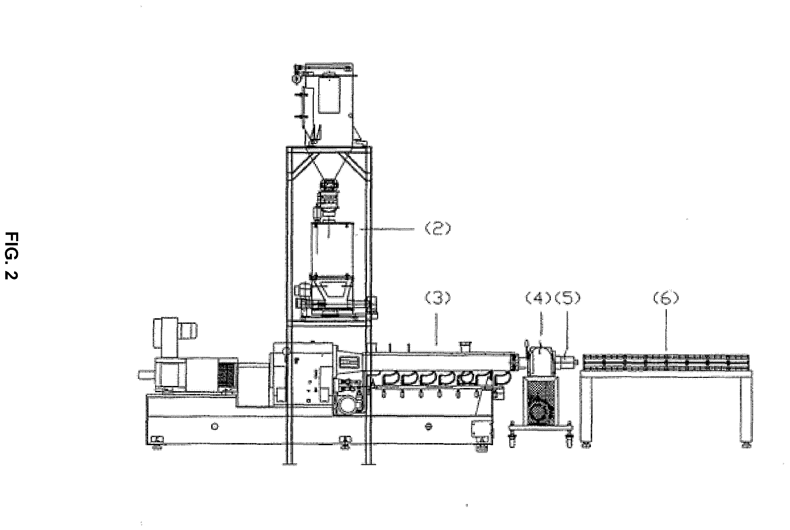

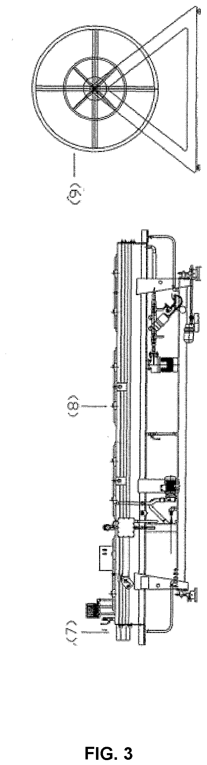

Specific details of apparatus useful in a method of the invention can be seen from the flowchart of Figure 1 and the schematic drawing in Figure 2 and Figure 3. The apparatus of the invention is typically arrange "in line" as a single production line, for example to provide greater convenience. For the purposes of providing enhanced clarity in the schematic drawings, however, the apparatus has been split over Figure 2 and Figure 3. With reference to Figures 1 to 3, the apparatus typically includes the following components:
A) Batch mixing: polyolefin structural polymer (e.g. HDPE), along with photoinitiator(s); and optionally one or more of an anti-oxidant (AO), a light stabiliser such as a hindered amine light stabilizer (HALS), co-agent(s) processing aid(s) and filler(s), to make up the formulation. These components may be premixed in a rotational mixer. The components may be the components of a pipe of the invention as described herein.
(B) Feeding: The mixed material is metered into the extrusion feed throat 2.
(C) Extrusion: An extruder 3 is used to melt, mix, and meter material. Influence on material processing properties can be achieved by altering the screw configuration of the extruder. Influence on material processing properties can also be achieved separately by running at variable RPM, and / or by changing individual barrel temperature values. High flexibility in output and line speeds are key features of this technology.
(D) Gear pump: From the extruder 3, melted polymer passes through a gear pump 4. The gear pump 4 delivers a precise volume of material to the die head 5.
(E) Die head: The die head 5 may be of a spiral mandrel design, and is attached directly after the gear pump 4. This is where polymer is shaped into a pipe profile, via a tip and die attached at the end. The tip and die are machined to specified dimensions as necessary.
(F) Curing chamber with UV Irradiators: Directly after the tip and die, the extruded pipe is introduced to a high energy UV irradiator unit 6. This irradiator makes high speed and efficient crosslinking possible. The irradiator unit 6 may comprise, a series of irradiator modules that are assembled in a row, with each subsequent irradiator module adjacent to the previous module, so that pipe is constantly and consistently being exposed to a controlled level of UV radiation. Other arrangements of UV lamps may also be used, as would be contemplated by the skilled person. The irradiator unit 6 may comprise microwave powered UV lamps, for example high efficiency microwave powered lamps.
(G) Calibration fixture: The pipes next enter the cooling unit 8 through a calibration fixture 7, where the pipe dimensions are calibrated and fixed.
(H) Cooling unit: The cooling is conducted by a cooling unit 8. The cooling unit may comprise a row of spray cooling water baths.
(I) Take up reel: At the end of the production line, typically a coiler 9 receives and puts the pipes on reels.

The process is based on the use of a photo-crosslinkable pipe formulation where a photoinitiator (PI) is added. The PI interacts with the UV irradiation to induce crosslinking of the pipe formulation to form crosslinked polyethylene, i.e., PEX. Along with other additives mixed in with the formulation (when present), the presence of the photoinitiator allows for the tubing to be crosslinked throughout the entire pipe wall. The pipes of the invention may be formulated according to the compositions and components described herein above. Pipes of the invention may also be formed using the formulations of the examples.

Where the extruder is a twin screw extruder, the twin screws used in the extruder can in principle be constructed in two different ways, i.e., with a co-rotating or a counter-rotating design.

Co-rotating twin screws may be configured with a number of screw elements along the screw axis, which may be combined in a number of different configurations according to the nature of the input raw olefin and additives. The extruder body of typical co-rotating twin screws is constructed of barrels, which can be seen as separate reactors which also provide the flexibility to dedicate one or more specific barrels to perform in certain ways. For example, it is possible to performed direct injection of raw materials into specific zones of the process i.e. into specific barrels. It is also possible to control the conditions in each barrel independently.

The two parallel co-rotating screws consist of a number of designed screw elements. They are arranged in a modular flexible design with typically 10 operative zones (barrels). Each barrel can have its own design and function (heating, cooling, etc.). The geometry of the screws is such that the channels are lengthwise open, i.e., there is opportunity for flow in axial direction; flow is possible both upstream and upstream. The screws are crosswise closed with conveying elements, i.e., multiple parallel paths along machine axis, i.e., no communication possible between channels. However, the screws can be made crosswise open with kneading elements, which gives opportunity for distributive mixing at expense of pressure generating capacity. The extruder can be designed to act as a true and efficient mixer. The co-rotating twin screws are drag flow pumps with forced displacement at intermesh.

Liquids can be added in a controlled fashion, for example at the end of the extruder. A vacuum can be applied in a specific zone, which makes it possible to add components available as slurries or other liquids. For example, the solvent can be removed prior to exit of the extrudate from the extruder. Pigments, stabilizers, additional high performance polymers, etc., can also potentially be added sequentially in the extrusion process.

The apparatus used in the methods of the invention is flexible in terms of the processing of different materials and dimensions of the produced pipes, for example because the screw design can easily be altered by re-designing individual screw elements, and/or by moving around existing screw elements. In principle, this means that it is possible to use the same extruder for different pipe dimensions, with e.g. the same extruder output (kilograms/hour; (kg/h)) utilized for all pipe dimensions, which is unique in the industry. For example, the method of the present invention may be performed with an extruder output of greater than 100 kg/h, e.g. greater than 150 kg/hr, greater than 200 kg/h, greater than 250 kg/hr or greater than 300 kg/h. For example, a method of the invention may be performed at an extrusion rate of 100 to 500 kg / hr, 150 to 450 kg/hr, or 200 to 400 kg/hr. Pipe dimensions may be in the range ½" to 8" diameter, e.g. in the range ½" to 4" diameter.

A ½" pipe may be extruded in the method of the present invention at a rate of about 140 kg/h and extrusion speed of about 30 m/min; while a 4" pipe may be extruded at a rate of about 2 m/min.

In the method of the present invention the extrusion may be performed at a temperature of about 200 °C. It is therefore preferred that the additives used in the methods of the invention, e.g. photoinitiator(s); and/or co-agent(s); and/or anti-oxidant(s); and/or hindered amine light stabilizer(s); and/or filler(s); and/or processing aids, are not subject to fuming at 200 °C.

The term UV curing is normally used when a combination of a photoinitiator and an appropriate monomer/oligomer UV lacquer formulation is exposed to ultraviolet radiation to form high performance thin coatings for various commercially established and well known applications. The methods of the invention may use highly efficient microwave powered UV lamps (for example microwave powered UV lamps provided by, e.g. Fusion UV Systems). The methods of the invention may use microwave powered UV lamps, e.g. highly efficient microwave powered UV lamps, to provide the UV radiation, which in combination with a photoinitiator and an optional co-agent facilitates crosslinking of for example polyethylene to form PEX pipes and tubing.

### USES

In another aspect, there is provided a use of a photoinitiator as defined herein in the production of a cross-linked polyolefin pipe.

In another aspect, there is provided a cross-linked polyolefin pipe obtainable or obtained by a method or use as described herein.

In another aspect, there is provided a use of an extruded polymeric pipe as described herein or of a cross-linked polyolefin pipe as described herein for the transport of water. The water may be drinking water.

### EXAMPLES

### Example 1 - Additional embodiments

In a preferred embodiment, there is provided an extruded polymeric pipe formed from a composition comprising:
a polyolefin structural polymer;
a photoinitiator in an amount of from about 0.02% to 3% by weight; and
a co-agent in an amount of 0.02% to 10% by weight;
wherein the photoinitiator is a compound of formula (I) or formula (II): 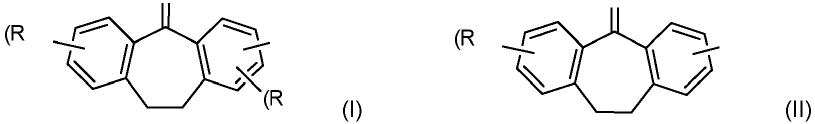 wherein:
R¹ is independently selected at each occurrence from -halo, -OR³, -(C₁ - C₄)alkyl, -(C₂ - C₄)alkenyl and -(C₂ - C₄)alkynyl;
R² is selected from -C₄ - C₂₄ alkyl, -(CH₂)ₘ(C₂ - C₂₄₋ₘ alkenyl), -(CH₂)ₘ(C₂ - C₂₄₋ₘ alkynyl), -C₄ - C₂₄ haloalkyl, -(CH₂)ₘ(C₂ - C₂₄₋ₘ haloalkenyl), and -(CH₂)ₘ(C₂ - C₂₄₋ₘ haloalkynyl);
R³ is independently selected at each occurrence from H, -C₁ - C₂₄ alkyl, -(CH₂)ₘ(C₂ - C₂₄₋ₘ alkenyl), -(CH₂)ₘ(C₂ - C₂₄₋ₘ alkynyl), -C₂ - C₂₄ haloalkyl, -(CH₂)ₘ(C₂ - C₂₄₋ₘ haloalkenyl),
and -(CH₂)ₘ(C₂ - C₂₄₋ₘ haloalkynyl);
m is independently at each occurrence selected as an integer of from 2 to 22;
n is an integer selected from 0 to 4; and
p is an integer selected from 0 to 3;
wherein the total number of carbon atoms in all R¹ and R² is at least 8.

In a preferred embodiment, the polyolefin structural polymer is selected from polyethylene, polypropylene, polybutylene, and any copolymers thereof.

In a preferred embodiment, the polyethylene is high density polyethylene (HDPE) with a melt flow index (MFI) of at least 2.

In a preferred embodiment, the polyethylene has a MFI of at least 5.

In a preferred embodiment, R² is selected from -C₄ - C₂₄ alkyl and -C₄ - C₂₄ haloalkyl.

In a preferred embodiment, R² is -C₈ - C₂₀ alkyl.

In a preferred embodiment, n is selected from 0 and 1; and/or wherein p is selected from 0 and 1.

In a preferred embodiment, n is 0 and/or p is 0, and R² comprises at least 8 carbon atoms.

In a preferred embodiment, the photoinitiator is a compound of formula (III):

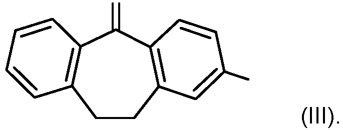

In a preferred embodiment, the photoinitiator is:

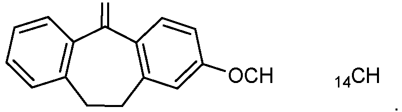

In a preferred embodiment, the composition comprises at least two different photoinitiator compounds of formula (I) and/or formula (II).

In a preferred embodiment, ein the co-agent comprises at least one reactive carbon-carbon double bond, optionally at least two reactive carbon-carbon double bonds.

In a preferred embodiment, the co-agent is selected from or comprises acrylates, polybutadienes, allyl ethers, vinyl ethers and mono or polyunsaturated oils.

In a preferred embodiment, the co-agent comprises an oligomer or pre-polymer that is a polyurethane acrylate.

In a preferred embodiment, the co-agent comprises at least one of triallylcyanurate; polybutadiene optionally selected from polybutadiene 3000, polybutadiene 5000, hydroxy terminated polybutadiene, hydroxy terminated and epoxidized polybutadiene, Polybutadiene-Ricon 142, Polybutadiene-Ricon 152, Polybutadiene-Ricon 156, Polybutadiene-Ricon 157, polybutadiene diacrylate; or trimethylolpropane triacetate.

In a preferred embodiment, the co-agent is in an amount of 0.3 to 1.5% by weight.

In a preferred embodiment, the pipe further comprises a hindered amine light stabiliser in an amount of 0.05 to 1% by weight.

In a preferred embodiment, the hindered amine light stabiliser is selected from or comprises: 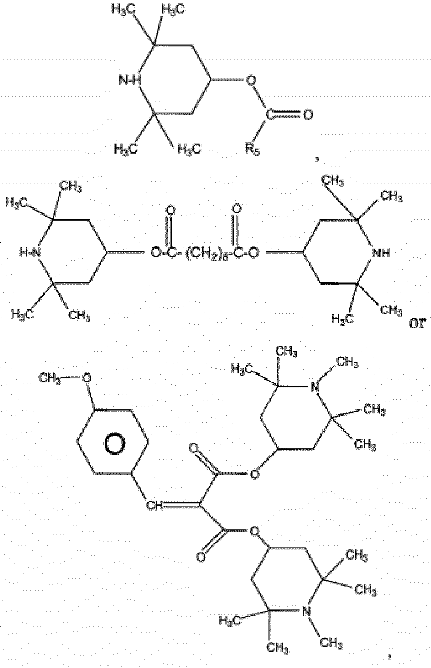 wherein R⁵ is a C₂-C₂₄ alkyl group.

In a preferred embodiment, the hindered amine light stabiliser is selected from or comprises Cyasorb 3853, Chimasorb 944LD, Tinuvin 770, Tinuvin 622.

In a preferred embodiment, the hindered amine light stabiliser is in an amount of 0.05 to 0.3% by weight.

In a preferred embodiment, the pipe further comprises an antioxidant in an amount of 0.1 to 1% by weight.

In a preferred embodiment, the antioxidant is at least one phenolic antioxidant.

In a preferred embodiment, the antioxidant comprises

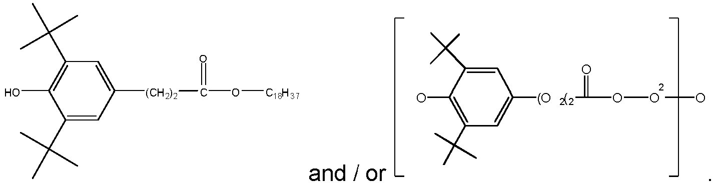

In a preferred embodiment, the antioxidant is present in an amount of 0.25 to 0.75% by weight.

In a preferred embodiment, the pipe is a cross-linked polyolefin pipe with the characteristics of a pipe obtainable by:
extrusion of a mixture comprising the polyolefin structural polymer, photoinitiator and co-agent from a co-rotating twin screw extruder to form an extruded pipe; and
cross-linking the structural polymer by irradiating the extruded pipe with UV radiation.

In a preferred embodiment, the extrusion comprises passing the mixture from the extruder through a gear pump and then a die head.

In a preferred embodiment, the degree of crosslinking is in the range of about 60 to about 90%, optionally wherein the degree of crosslinking is in the range of about 70% to about 75%.

In a preferred embodiment, , when tested in accordance with NSF 61, the level of residuals of the following compounds are at the specified level:
benzene is less than 5 ppb,
benzophenone is less than or equal to 30 ppb,
benzhydrol is less than or equal to 50 ppb,
p-hydroxybenzophenone is less than or equal to 10 ppb,
p-hydroxybenzhydrol is less than or equal to 10 ppb, and
p-formylbenzophenone is less than or equal to 10 ppb.

In a preferred embodiment, the level of residual benzene is less than 1 ppb.

In a preferred embodiment, there is provided a method of producing a cross-linked polyolefin pipe comprising:
extrusion of an extrusion mixture from an extruder to form an extruded pipe; and
cross-linking a polyolefin structural polymer by irradiating the extruded pipe with UV radiation,
wherein the extrusion mixture comprises:
   a polyolefin structural polymer;
   a photoinitiator in an amount of from about 0.02% to 3% by weight; and
   a co-agent in an amount of 0.02% to 10% by weight;
   wherein the photoinitiator is a compound of formula (I) or formula (II): 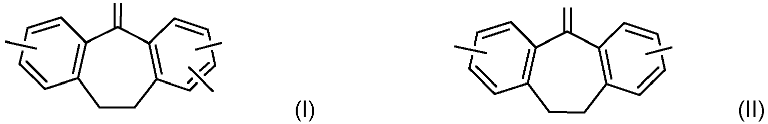
wherein:
R¹ is independently selected at each occurrence from -halo, -OR³, -(C₁ - C₄)alkyl, -(C₂ - C₄)alkenyl and -(C₂ - C₄)alkynyl;
R² is selected from -C₄ - C₂₄ alkyl, -(CH₂)ₘ(C₂ - C₂₄₋ₘ alkenyl), -(CH₂)ₘ(C₂ - C₂₄₋ₘ alkynyl), -C₄ - C₂₄ haloalkyl, -(CH₂)ₘ(C₂ - C₂₄₋ₘ haloalkenyl), and -(CH₂)ₘ(C₂ - C₂₄₋ₘ haloalkynyl);
R³ is independently selected at each occurrence from H, -C₄ - C₂₄ alkyl, -(CH₂)ₘ(C₂ - C₂₄₋ₘ alkenyl), -(CH₂)ₘ(C₂ - C₂₄₋ₘ alkynyl), -C₂ - C₂₄ haloalkyl, -(CH₂)ₘ(C₂ - C₂₄₋ₘ haloalkenyl), and -(CH₂)ₘ(C₂ - C₂₄₋ₘ haloalkynyl);
m is independently at each occurrence selected as an integer of from 2 to 22;
n is an integer selected from 0 to 4; and
p is an integer selected from 0 to 3,
wherein the total number of carbon atoms in all R¹ and R² is at least 8.

In a preferred embodiment, wherein the polyolefin structural polymer is as defined in any of the embodiments above.

In a preferred embodiment, the photoinitiator is as further defined in any of the embodiments above.

In a preferred embodiment, the co-agent is as defined in any of the embodiments above.

In a preferred embodiment, the extrusion mixture further comprises a hindered amine light stabiliser as defined in any of the embodiments above.

In a preferred embodiment, the extrusion mixture further comprises an antioxidant as defined in any of the embodiments above.

In a preferred embodiment, the cross-linked polyolefin pipe has a degree of crosslinking is in the range of about 60 to about 90%, optionally wherein the degree of crosslinking is in the range of about 70% to about 75%.

In a preferred embodiment, the extrusion comprises passing the mixture from the extruder through a gear pump and then a die head.

In a preferred embodiment, after irradiating, the cross-linked polyolefin pipe is calibrated by a calibration fixture.

In a preferred embodiment, the extruder is selected from a single screw extruder, a counter-rotating twin screw extruder and a co-rotating twin screw extruder.

In a preferred embodiment, the components of the extrusion mixture are mixed before being injected into the extruder, optionally wherein the extruder is a single screw extruder or a counter-rotating twin screw extruder.

In a preferred embodiment, the extruder is a co-rotating twin screw extruder and the polyolefin structural polymer and at least one component are separately injected into the extruder; wherein the at least one component is selected from the photoinitiator, co-agent, and, when present, the phenolic antioxidant, and/or the hindered amine light stabiliser; and wherein the polyolefin structural polymer and the at least one component are mixed by a mixing element of the twin-screw extruder.

In a preferred embodiment, the at least one component comprises two or more components.

In a preferred embodiment, the at least one component comprises the photoinitiator, the co-agent, and the phenolic antioxidant.

In a preferred embodiment, the at least one component comprises the photoinitiator, the co-agent, the phenolic antioxidant and the hindered amine light stabiliser.

In a preferred embodiment, the extrusion is performed at an extruder output of greater than 100 kg/h, optionally greater than 200 kg/h.

In a preferred embodiment, there is provided a use of a photoinitiator as defined in any of the embodiments above, in the production of a cross-linked polyolefin pipe.

In a preferred embodiment, there is provided a cross-linked polyolefin pipe obtainable by or obtained by a method of any of the embodiments above, or by the above use.

In a preferred embodiment, there is provided a use of an extruded polymeric pipe of any of the embodiments above or of a cross-linked polyolefin pipe above for the transport of water.

In a preferred embodiment, the water is drinking water.

### Example 2 - Exemplary pipes

Pipes were manufactured using 2-hexadecyloxy-5-dibenzosuberone, LoMicure 450 and 4-decyloxybenzophenone. The formulation for each experiment is described in Table 1.

A co-rotating twin screw extruder equipped with a pipe die head was used to extrude the pipes. After extrusion, the pipes were exposed to Ultraviolet light (UV) using two Fusion UV lamps equipped with D-bulbs to activate the photoinitiator and crosslink the polyethylene.

The gel density and hygiene of the resulting pipe samples were tested according to ASTM 876 and NSF 61 single point (commercial intermittent) method.

Gel density is determined by measuring the difference in mass of a sample before and after heating in xylene for a given amount of time. Polyethylene not contributing to the network will dissolve in hot xylene.

Hygiene was determined by conditioning the pipe samples for 17 days. Within 17 days the pipes were exposed to room temperature water and the water was exchanged 10 times. On the third week, the pipe samples were exposed to hot exposure water (82°C) for 30 minutes and allowed to stand at room temperature for the remaining 16 hours. After the third cycle of heating (Day 17), the water extracts were saved for analysis.

The concentration of benzene was measured in the resulting water extracts by a Gas Chromatogram (GC) equipped with Purge/Trap inlet and Mass Selective detector. A DB624 capillary column was used to facilitate compound separation.

As shown in Table 1, a small amount of benzene in Day 17 extraction water of pipe manufacturing using the comparative LoMicurre 450 and 4-decyloxybenzophenone was observed. In contrast, no benzene was detected in the pipe manufactured using 2-hexadecyloxy-5-dibenzosuberone. The Short Term Exposure Limit (STEL) and Total Allowable Concentration (TAC) specification for benzene is 5ppb.

| | | | | **NSF Single Point Day 17** |
|---|---|---|---|---|
| **Experiment** | **Photoinitiator** | **Formulation** | **Gel Density (%)** | **Benzene (ppb)** |
| 1 | 2-hexadecyloxy-5-dibenzosuberone | 0.76% PI/0.75% TMPTA/0.40% Irganox 1076/0.15% Cyasorb 3853 | 68.3 | Not detected |
| 2 | 2-hexadecyloxy-5-dibenzosuberone | 0.65% PI/0.75% TMPTA/0.40% Irganox 1076/0.15% Cyasorb 3853 | 69.4% | Not detected |
| 3 | 4-decyloxybenzophenone | 0.65% PI/0.75% TMPTA/0.40% Irganox 1076/0.15% Cyasorb 3853 | 71.3% | 5.7 |
| 4 | LoMicure 450 | 0.86% PI/0.75% TMPTA/0.40% Irganox 1076/0.15% Cyasorb 3853 | 66.3 | 6.5 |

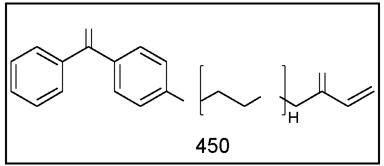

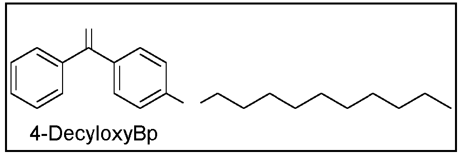

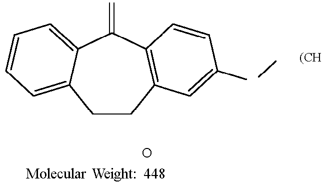

## Claims

1. An extruded polymeric pipe formed from a composition comprising:
a polyolefin structural polymer;
a photoinitiator in an amount of from about 0.02% to 3% by weight; and
a co-agent in an amount of 0.02% to 10% by weight;
wherein the photoinitiator is a compound of formula (I) or formula (II): 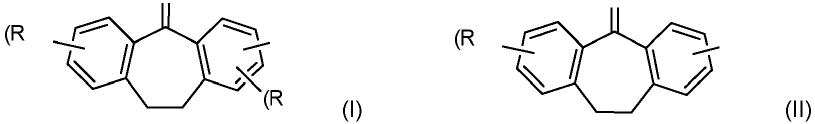
wherein:
R¹ is independently selected at each occurrence from -halo, -OR³, -(C₁ - C₄)alkyl, - (C₂ - C₄)alkenyl and -(C₂ - C₄)alkynyl;
R² is selected from -C₄ - C₂₄ alkyl, -(CH₂)ₘ(C₂ - C₂₄₋ₘ alkenyl), -(CH₂)ₘ(C₂ - C₂₄₋ₘ alkynyl), -C₄ - C₂₄ haloalkyl, -(CH₂)ₘ(C₂ - C₂₄₋ₘ haloalkenyl), and -(CH₂)ₘ(C₂ - C₂₄₋ₘ haloalkynyl);
R³ is independently selected at each occurrence from H, -C₁ - C₂₄ alkyl, -(CH₂)ₘ(C₂ - C₂₄₋ₘ alkenyl), -(CH₂)ₘ(C₂ - C₂₄₋ₘ alkynyl), -C₂ - C₂₄ haloalkyl, -(CH₂)ₘ(C₂ - C₂₄₋ₘ haloalkenyl), and -(CH₂)ₘ(C₂ - C₂₄₋ₘ haloalkynyl);
m is independently at each occurrence selected as an integer of from 2 to 22; and
n is an integer selected from 0 to 4; and
p is an integer selected from 0 to 3;
wherein the total number of carbon atoms in all R¹ and R² is at least 8.

2. The polymeric pipe of claim 1, wherein the polyolefin structural polymer is selected from polyethylene, polypropylene, polybutylene, and any copolymers thereof,
optionally wherein the polyethylene is high density polyethylene (HDPE) with a melt flow index (MFI) of at least 2.

3. The polymeric pipe of claim 1 or claim 2, wherein R² is selected from -C₄ - C₂₄ alkyl and -C₄ - C₂₄ haloalkyl, optionally wherein R² is -C₈ - C₂₀ alkyl.

4. The pipe of any preceding claim, wherein n is 0 and/or p is 0, and R² comprises at least 8 carbon atoms.

5. The polymeric pipe of any preceding claim, wherein the photoinitiator is:

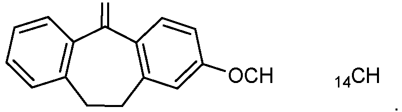

6. The polymeric pipe of any preceding claim, wherein the composition comprises at least two different photoinitiator compounds of formula (I) and/or formula (II).

7. The polymeric pipe of any preceding claim, wherein the co-agent comprises at least one reactive carbon-carbon double bond, optionally at least two reactive carbon-carbon double bonds.

8. The polymeric pipe of any preceding claim, wherein the co-agent comprises at least one of triallylcyanurate; polybutadiene optionally selected from polybutadiene 3000, polybutadiene 5000, hydroxy terminated polybutadiene, hydroxy terminated and epoxidized polybutadiene, Polybutadiene-Ricon 142, Polybutadiene-Ricon 152, Polybutadiene-Ricon 156, Polybutadiene-Ricon 157, polybutadiene diacrylate; or trimethylolpropane triacetate.

9. The polymeric pipe of any preceding claim, further comprising a hindered amine light stabiliser in an amount of 0.05 to 1% by weight.

10. The polymeric pipe of any preceding claim, further comprising an antioxidant in an amount of 0.1 to 1% by weight.

11. The polymeric pipe of any preceding claim, wherein the pipe is a cross-linked polyolefin pipe with the characteristics of a pipe obtainable by:
extrusion of a mixture comprising the polyolefin structural polymer, photoinitiator and co-agent from a co-rotating twin screw extruder to form an extruded pipe; and
cross-linking the structural polymer by irradiating the extruded pipe with UV radiation.

12. A method of producing a cross-linked polyolefin pipe comprising:
extrusion of an extrusion mixture from an extruder to form an extruded pipe; and
cross-linking a polyolefin structural polymer by irradiating the extruded pipe with UV radiation,
wherein the extrusion mixture comprises:
a polyolefin structural polymer;
a photoinitiator in an amount of from about 0.02% to 3% by weight; and
a co-agent in an amount of 0.02% to 10% by weight; wherein the photoinitiator is a compound of formula (I) or formula (II): 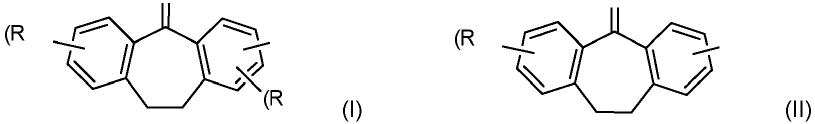 wherein:
R¹ is independently selected at each occurrence from -halo, -OR³, -(C₁ - C₄)alkyl, -(C₂ - C₄)alkenyl and -(C₂ - C₄)alkynyl;
R² is selected from -C₄ - C₂₄ alkyl, -(CH₂)ₘ(C₂ - C₂₄₋ₘ alkenyl), -(CH₂)ₘ(C₂ - C₂₄₋ₘ alkynyl), -C₄ - C₂₄ haloalkyl, -(CH₂)ₘ(C₂ - C₂₄₋ₘ haloalkenyl), and - (CH₂)ₘ(C₂ - C₂₄₋ₘ haloalkynyl);
R³ is independently selected at each occurrence from H, -C₄ - C₂₄ alkyl, - (CH₂)ₘ(C₂ - C₂₄₋ₘ alkenyl), -(CH₂)ₘ(C₂ - C₂₄₋ₘ alkynyl), -C₂ - C₂₄ haloalkyl, - (CH₂)ₘ(C₂ - C₂₄₋ₘ haloalkenyl), and -(CH₂)ₘ(C₂ - C₂₄₋ₘ haloalkynyl);
m is independently at each occurrence selected as an integer of from 2 to 22;
n is an integer selected from 0 to 4; and
p is an integer selected from 0 to 3;
wherein the total number of carbon atoms in all R¹ and R² is at least 8.

13. Use of a photoinitiator as defined in any of claims 1 and 3-5, in the production of a cross-linked polyolefin pipe.

14. A cross-linked polyolefin pipe obtainable by or obtained by a method of claim 12, or by the use of claim 13.

15. Use of an extruded polymeric pipe of any of claims 1 to 11 or of a cross-linked polyolefin pipe of claim 14 for the transport of water.
